(19) Europäisches Patentamt
European Patent Office
Office européen des brevets

(11) EP 4 092 075 A1

(12) EUROPÄISCHE PATENTANMELDUNG

(43) Veröffentlichungstag:
**23.11.2022 Patentblatt 2022/47**

(21) Anmeldenummer: **21174020.4**

(22) Anmeldetag: **17.05.2021**

(51) Internationale Patentklassifikation (IPC):
***C08K 5/00*** *(2006.01)* ***C08L 69/00*** *(2006.01)*

(52) Gemeinsame Patentklassifikation (CPC):
(C-Sets verfügbar)
**C08L 69/00;** C08K 2201/019 (Forts.)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder:
- **Heuer, Helmut Werner**
  **57074 Siegen (DE)**
- **Erkelenz, Michael**
  **47239 Duisburg (DE)**
- **Kaiser, Christian**
  **47918 Tönisvorst (DE)**

(74) Vertreter: **Levpat**
**c/o Covestro AG**
**Gebäude K12**
**51365 Leverkusen (DE)**

# (54) FLAMMWIDRIGE ZUSAMMENSETZUNG UMFASSEND 0,040 BIS 0,095 GEW.-% EINES FLAMMSCHUTZMITTELS

(57) Die vorliegende Erfindung betrifft Zusammensetzungen, enthaltend lineares Polycarbonat, verzweigtes Polycarbonat und eine geringe Menge an Salzen von Sulfonsäure-, Sulfonamid-, oder Sulfonimidderivaten. Ebenso betrifft die Erfindung eine Verwendung verzweigten Polycarbonats in einer Polycarbonatzusammensetzung zur Erzielung einer Klassifikation nach UL94 von V-0 bei einer Schichtdicke von 2,00 mm, bevorzugt 1,5 mm.

EP 4 092 075 A1

(52) Gemeinsame Patentklassifikation (CPC): (Forts.)

C-Sets
**C08L 69/00, C08K 5/0066, C08L 69/00;**
**C08L 69/00, C08K 5/42, C08K 5/5419,**
**C08L 69/00;**
**C08L 69/00, C08K 5/42, C08K 5/549,**
**C08L 69/00;**
**C08L 69/00, C08K 5/42, C08K 7/02, C08L 69/00;**
**C08L 69/00, C08K 5/42, C08L 69/00;**
**C08L 69/00, C08K 5/43, C08K 5/5419,**
**C08L 69/00;**
**C08L 69/00, C08K 5/43, C08K 5/549,**
**C08L 69/00;**
**C08L 69/00, C08K 5/43, C08K 7/02, C08L 69/00;**
**C08L 69/00, C08K 5/43, C08L 69/00;**
**C08L 69/00, C08K 5/435, C08K 5/5419,**
**C08L 69/00;**
**C08L 69/00, C08K 5/435, C08K 5/549,**
**C08L 69/00;**
**C08L 69/00, C08K 5/435, C08K 7/02,**
**C08L 69/00;**
**C08L 69/00, C08K 5/435, C08L 69/00**

## Beschreibung

Die vorliegende Erfindung betrifft Zusammensetzungen, enthaltend lineares Polycarbonat, verzweigtes Polycarbonat und eine geringe Menge an Salzen von Sulfonsäure-, Sulfonamidoder Sulfonimidderivaten. Ebenso betrifft die Erfindung eine Verwendung verzweigten Polycarbonats in einer Polycarbonatzusammensetzung zur Erzielung einer Klassifikation nach UL94 von V-0 bei einer Schichtdicke von 2,00 mm, bevorzugt 1,5 mm.

Polycarbonatzusammensetzungen genießen breite Anwendungsmöglichkeiten. Sie müssen jedoch häufig insbesondere für dünnwandige Anwendungen zusätzlich mit Flammschutzmitteln additiviert werden, um die hohen Anforderungen an Flammschutzeigenschaften erfüllen zu können. Dabei stehen die Reduktion der Menge oder sogar Verbannung unterschiedlicher Flammschutzmittel jedoch immer wieder im Fokus, da je nach chemischer Natur der Flammschutzmittel sie bereits als "besonders besorgniserregende Stoffe" (sogenannte substances of very high concern, SVHC) eingestuft werden.

Beispielsweise können halogenierte Flammschutzmittel unter Hitzeeinwirkung unerwünschte Halogenradikale und daraus resultierende Folgeprodukte, die schädlich für die Umwelt sind, freisetzen. In vielen Ländern dieser Welt wird daher eine Verwendung solcher Flammschutzmittel vermieden.

Ein gängiges Flammschutzmittel in Polycarbonatzusammensetzungen ist Kaliumperfluorbutansulfonat (auch Rimarsalz oder C4-Salz genannt). Einige PFAS (Polyfluorierte Alkylsubstanzen) gelten unter REACH bereits als besonders besorgniserregende Stoffe, da sie sehr langlebig sind, sich in Organismen anreichern (Bioakkumulation) und für Menschen schädlich sein können. Für besonders besorgniserregende Stoffe gelten im Rahmen der REACH-Verordnung besondere Auskunftspflichten und es kann eine Zulassungspflicht entstehen, d.h. nur explizit zugelassene Verwendungen dürfen weiter genutzt werden.

Das Umweltbundesamt UBA hält derzeit, insbesondere unter Berücksichtigung des Vorsorgeprinzips, eine Regulierung der gesamten Stoffgruppe für notwendig, denn alle PFAS könnten für lange Zeiträume in der Umwelt verbleiben. Daher erarbeitet das UBA mit anderen Behörden aus Deutschland, den Niederlanden, Dänemark, Schweden und Norwegen einen EU-weiten Beschränkungsvorschlag unter REACH für diese Stoffgruppe.

Die European Chemicals Agency (ECHA) hat nun die Verbindung "Perfluorobutane sulfonic acid (PFBS) und seine Salze" auf die REACH Kandidaten-Liste der SVHC-Substanzen gesetzt. Damit ist auch das C4-Salz betroffen. Für lange Zeit wurde diese Verbindung zur reproduzierbar guten Flammwidrigkeitsverbesserung von Polycarbonatzusammensetzungen eingesetzt. Die Bereitstellung entsprechender Polycarbonatzusammensetzungen mit vergleichbarer Flammwidrigkeit aber unter Verwendung weniger Kaliumperfluorbutansulfonat stellt daher eine große Herausforderung dar.

Die WO2008/060714 A2 beschreibt, dass flammwidrige Polycarbonatzusammensetzungen mit gleichzeitig guten Fließeigenschaften und guter Transparenz dadurch erhalten werden können, dass das verwendete Polycarbonat durch Cyanophenol-Endgruppen terminiert wird. Beispiel 16 dieses Dokuments zeigt eine Zusammensetzung mit 70 Teilen linearem Polycarbonat, 30 Teilen verzweigtem Polycarbonat und 0,08 Teilen Kaliumperfluorbutansulfonat. Diese Zusammensetzung weist eine UL94 Klassifikation von V-0 bei 2,5 mm auf. Jedoch wird sie bei geringerer Schichtdicke von 1,57 mm als "tropfend" bezeichnet. Der Einsatz von Cyanophenol-Endgruppen für das Polycarbonat kann jedoch auch nachteilig sein. Die Cyanogruppe ist eine reaktive Gruppe, die zu Folgeprodukten Instabilitäten im Polycarbonat führen kann. In der Regel führen solche Reaktionen zu unerwünschten Veränderungen der Farbe des Polycarbonats. Zudem ist die Verwendung von Cyanophenol relativ teuer.

Die WO03/050176 A1 betrifft transluzente flammwidrige Polycarbonatzusammensetzungen, welche ohne den Einsatz von chlorierten oder bromierten Flammschutzmitteln dennoch eine gute Flammwidrigkeit aufweisen und dabei eine hohe Transparenz und einen niedrigen Haze aufweisen. Zur Lösung wird dabei eine Zusammensetzung, umfassend ein verzweigtes Polycarbonat, PTFE und unter anderem auch Kaliumperfluorbutansulfonat vorgeschlagen. Vergleichsbeispiel 13 dieses Dokuments beschreibt eine Zusammensetzung mit 82 Teilen linearem Polycarbonat, 18 Teilen verzweigtem Polycarbonat und 0,08 Teilen Kaliumperfluorbutansulfonat. Das verzweigte Polycarbonat weist einen Verzweigungsgrad von 0,3 mol auf und dieses Beispiel weist zudem keine gute Flammwidrigkeit auf.

Das Dokument WO2012/06292 A1 beschreibt Polycarbonatzusammensetzungen mit guter Flammwidrigkeit bei geringen Schichtdicken ohne die Verwendung von chlorierten oder bromierten Flammschutzmitteln. Dazu wird die Verwendung eines linearen Phenyl-enthaltenden Siloxans und eines cyclischen Phenyl-enthaltenden Siloxans vorgeschlagen. Die Beispiele Batch 1-3 bis 1-7 in Tabelle 3 der WO2012/06292 A1 beschreiben Zusammensetzungen mit 70 Teilen linearem Polycarbonat, 30 Teilen verzweigtem Polycarbonat und 0,08 Teilen Kaliumperfluorbutansulfonat. Dabei wird jedoch der Verzweigungsgrad des verwendeten Polycarbonats nicht explizit angegeben, scheint jedoch relativ gering zu sein.

Ausgehend von diesem Stand der Technik bestand die Aufgabe der vorliegenden Erfindung darin, mindestens einen Nachteil des Stands der Technik zu überwinden. Insbesondere bestand die Aufgabe der vorliegenden Erfindung darin, eine Polycarbonat enthaltende Zusammensetzung bereitzustellen, welche höchstens 0,095 Gew.-% einer Verbindung, ausgewählt aus der Gruppe von Alkali-, Erdalkali- oder Ammoniumsalzen aliphatischer oder aromatischer

Sulfonsäure-, Sulfonamid-, oder Sulfonimidderivate und Kombinationen aus diesen enthält und dabei gleichzeitig mindestens eine Flammwidrigkeit aufweist, welche der UL94 Klassifikation von V-0 bei 2,0 mm, bevorzugt bei 1,5 mm entspricht. Zudem sollten dabei die thermischen Eigenschaften und/oder die Verarbeitbarkeit der Zusammensetzung nicht negativ im Vergleich zu einer Zusammensetzung mit höheren Gehalten an Verbindungen, ausgewählt aus der Gruppe von Alkali-, Erdalkali- oder Ammoniumsalzen aliphatischer oder aromatischer Sulfonsäure-, Sulfonamid-, oder Sulfonimidderivate und Kombinationen aus diesen, beeinflusst werden.

Mindestens eine, bevorzugt alle der oben genannten Aufgaben wurden durch die vorliegende Erfindung gelöst. Überraschend wurde gefunden, dass eine Kombination der Verwendung einer speziellen Menge an einer Verbindung, ausgewählt aus der Gruppe von Alkali-, Erdalkali- oder Ammoniumsalzen aliphatischer oder aromatischer Sulfonsäure-, Sulfonamidoder Sulfonimidderivate und Kombinationen aus diesen und eines Polycarbonats, welches einen speziellen Verzweigungsgrad aufweist zu einer Flammwidrigkeit führt, welche mindestens einer UL94 Klassifikation von V-0 bei 2,00 mm, bevorzugt 1,5 mm entspricht. Die erfindungsgemäße Zusammensetzung reduziert daher die Menge einer Verbindung, welche auf der SVHC-REACH-Liste der ECHA steht. Dabei wurde überraschenderweise gefunden, dass auf die Verwendung von Cyanophenol-Endgruppen im verzweigten Polycarbonat verzichtet werden kann und dennoch eine gute Flammwidrigkeit erzielt werden kann. Gleichzeitig sind die verwendeten Polycarbonatendgruppen nicht mehr reaktiv, so dass eine stabilere Polycarbonatzusammensetzung als unter Verwendung von Cyanophenol als Endgruppe entsteht. Ebenso können günstigere Terminierungsgruppen verwendet werden. Dabei ist es insbesondere überraschend, dass bevorzugt auf weitere Additive zur Polycarbonatzusammensetzung verzichtet werden kann, welche häufig für die Erzielung von hoher Flammwidrigkeit bei dünnen Schichtdicken verwendet wird. Unter anderem weist die Zusammensetzung bevorzugt selbst ohne PFTE, ohne ein halogeniertes Flammschutzmittel und/oder auch ohne ein Polysiloxan-Polycarbonat-Blockcokondensat mindestens eine UL94 Klassifikation von V-0 bei einer Schichtdicke von 2,0 mm, bevorzugt 1,5 mm auf.

Zusätzlich wurde gefunden, dass die erfindungsgemäßen Zusammensetzungen eine verbesserte Fließfähigkeit und damit bessere Verarbeitbarkeit aufweisen als vergleichbare Zusammensetzung mit einem höheren Gehalt an Verbindungen, ausgewählt aus der Gruppe von Alkali-, Erdalkali- oder Ammoniumsalzen aliphatischer oder aromatischer Sulfonsäure-, Sulfonamid-, oder Sulfonimidderivate und Kombinationen aus diesen. Ebenso bleiben die thermischen Eigenschaften der erfindungsgemäßen Zusammensetzung nahezu vergleichbar zu denen mit höheren Gehalten der besagten Verbindung.

Erfindungsgemäß wird eine Zusammensetzung bereitgestellt, enthaltend

(A) 3 bis 85 Gew.-%, bevorzugt 4 bis 82 Gew.-%, besonders bevorzugt 14 bis 81 Gew.-% und insbesondere bevorzugt 19 bis 80 Gew.-% eines linearen Polycarbonats,

(B) 15 bis 96 Gew.-%, bevorzugt 18 bis 95 Gew.-%, besonders bevorizugt 19 bis 85 Gew.-% und insbesondere bevorzugt 20 bis 80 Gew.-% eines Polycarbonats mit einem Verzweigungsgrad von 0,8 bis 1,5 mol-%, welches keine Endgruppen der Formel (I) umfasst:

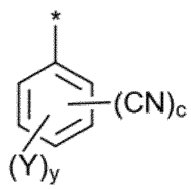

(I),

in der Y jeweils unabhängig für ein Halogen, eine Alkylgruppe mit 1 bis 3 Kohlenstoffatomen, eine Alkoxygruppe mit 1 bis 3 Kohlenstoffatomen, eine Arylalkylgruppe mit 7 bis 12 Kohlenstoffatomen, eine Alkylarylgruppe oder eine Nitrogruppe steht,

y 0 bis 4 ist und c 1 bis 5 ist, unter der Voraussetzung, dass y+c 1 bis 5 ist, und in der * für die Position steht, mit der die Formel (I) das Polycarbonat (B) terminiert,

(C) 0,040 bis 0,095 Gew.-% einer Verbindung, ausgewählt aus der Gruppe von Alkali-, Erdalkali- oder Ammoniumsalzen aliphatischer oder aromatischer Sulfonsäure-, Sulfonamid-, oder Sulfonimidderivate und Kombinationen aus diesen, und

(D) 0 bis 40 Gew.-% einer Verstärkungsfaser,

wobei sich die Gew.-% auf die Summe der Komponenten (A) bis (D) beziehen.

Erfindungsgemäß wird dabei als Komponente (A) ein lineares Polycarbonat eingesetzt. Erfindungsgemäß wird dabei der Begriff "linear" insbesondere zur Abgrenzung zur "verzweigten" Komponente (B) verwendet. Dem Fachmann sind lineare Polycarbonate bekannt. Ihm ist auch bekannt, dass viele als "linear" bezeichnete Polycarbonate einen geringen Anteil an Verzweigungen aufweisen können. Dies resultiert teilweise durch den Herstellungsprozess des Polycarbonats. Ein Beispiel für diese intrinsische Verzweigungen sind so genannte Fries-Strukturen, wie sie für Schmelzepolycarbonate in der EP 1 506 249 A1 beschrieben sind. Erfindungsgemäß bevorzugt bedeutet der Begriff "linear", dass das Polycarbonat einen Verzweigungsgrad von ≤ 0,4 mol-% aufweist. Der Verzweigungsgrad ist dabei, wie unten zur Komponente (B) ausgeführt, definiert.

Bei der Komponente (A) handelt es sich bevorzugt um ein aromatisches Polycarbonat. Unter "Polycarbonat" im erfindungsgemäßen Sinne werden sowohl Homopolycarbonate als auch Copolycarbonate verstanden. Erfindungsgemäß können auch Mischungen von Polycarbonaten verwendet werden, wobei dann aber jede der einzelnen Komponenten linear sind.

Erfindungsgemäße Zusammensetzungen enthalten 3 bis 85 Gew.-% der Komponente (A), bevorzugt 4 bis 82 Gew.-%, besonders bevorzugt 14 bis 81 Gew.-%, insbesondere bevorzugt 19 bis 80 Gew.-%. Ein Anteil von 3 bis 85 Gew.-% der Komponente (A), bzw. der oben beschriebenen bevorzugten Gew.-% der Gesamtzusammensetzung bedeutet erfindungsgemäß, dass die Zusammensetzung auf Polycarbonat basiert.

Die Herstellung der linearen Polycarbonate, die in den Zusammensetzungen enthalten sind, erfolgt in bekannter Weise aus Dihydroxyarylverbindungen, Kohlensäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertné, BAYER AG, "Polycarbonates" in Encyclopedia of Polymer Science and Engineering, Volume 11, Second Edition, 1988, Seiten 648-718 und schließlich auf U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117 bis 299 verwiesen.

Die Herstellung der Polycarbonate erfolgt z.B. durch Umsetzung von Dihydroxyarylverbindungen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern und gegebenenfalls unter Verwendung von trifunktionellen oder mehr als trifunktionellen Verzweigern. Ebenso ist eine Herstellung über ein Schmelzepolymerisationsverfahren durch Umsetzung von Dihydroxyarylverbindungen mit beispielsweise Diphenylcarbonat möglich.

Für die Herstellung der Polycarbonate geeignete Dihydroxyarylverbindungen sind beispielsweise Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α-α'-Bis-(hydroxyphenyl)-diisopropylbenzole, Phthalimidine, abgeleitet von Isatin- oder Phenolphthaleinderivaten, sowie deren kernalkylierte und kernarylierte Verbindungen.

Bevorzugte Dihydroxyarylverbindungen sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol und 1,1-Bis-(4-hydroxyphenyl)-3,3,5-trimethylcyclohexan, sowie die Bisphenole (Aa) bis (Ca)

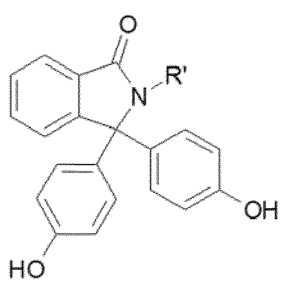

(Aa)

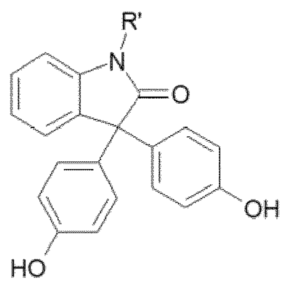

(Ba)

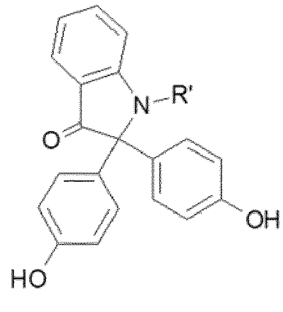

(Ca),

in denen R' jeweils für C1- bis C4-Alkyl, Aralkyl oder Aryl, bevorzugt für Methyl oder Phenyl, ganz besonders bevorzugt für Methyl, steht.

Besonders bevorzugte Bisphenole sind 2,2-Bis-(4-hydroxyphenyl)-propan (Bisphenol A), 2,2-Bis-(3,5-dimethyl-4-hydroxyphenyl)-propan, 1,1 -Bis-(4-hydroxyphenyl)-cyclohexan, 1,1-Bis-(4-hydroxyphenyl)-3,3,5-trimethylcyclohexan, 4,4'-Dihydroxydiphenyl und Dimethyl-Bisphenol A sowie die Bisphenole der Formeln (Aa), (Ba) und (Ca). Ganz besonders bevorzugt ist Bisphenol A.

Diese und weitere geeignete Dihydroxyarylverbindungen sind z.B. in US 3 028 635 A, US 2 999 825 A, US 3 148 172 A, US 2 991 273 A, US 3 271 367 A, US 4 982 014 A und US 2 999 846 A, in DE 1 570 703 A, DE 2063 050 A, DE 2 036 052 A, DE 2 211 956 A und DE 3 832 396 A, in FR 1 561 518 A, in der Monographie "H. Schnell, Chemistry and Physics of Polycarbonates, Interscience Publishers, New York 1964" sowie in JP 62039/1986 A, JP 62040/1986 A und JP 105550/1986 A beschrieben.

Im Fall der Homopolycarbonate wird nur eine Dihydroxyarylverbindung eingesetzt, im Fall der Copolycarbonate werden mehrere Dihydroxyarylverbindungen eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Cumylphenol sowie deren Mischungen. Bevorzugt wird jedoch kein Cyanophenol eingesetzt als Kettenabbrecher.

Insbesondere ist es bevorzugt, dass das lineare Polycarbonat (A) keine Endgruppen der Formel (I) umfasst:

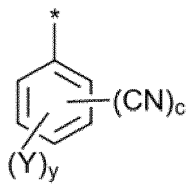

(I),

in der Y, y und c wie oben definiert sind. Bevorzugt ist es dabei, dass in Formel (I) in Bezug auf Komponente (A) y 1 bis 2 ist und c 1 bis 2 ist. Besonders bevorzugt ist es dabei, dass in Formel (I) y 0 ist und c 1 bis 2 ist. Ganz besonders bevorzugt ist Formel (I) para-Cyanophenyl oder 3,4-Dicyanophenyl.

Erfindungsgemäß bevorzugt ist es des Weiteren, dass das lineare Polycarbonat (A) und/oder gegebenenfalls auch das später beschriebene Polycarbonat (B) Endgruppen der Formel (2a), (2b) und/oder (2c) umfasst:

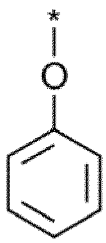

(2a),

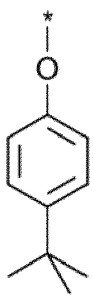

(2b),

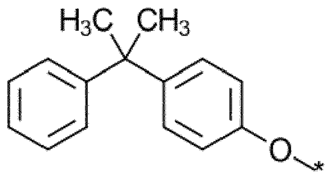

(2c),

wobei * für die Position steht, mit der die Formeln (2a), (2b) und (2c) das jeweilige Polycarbonat (A) und/oder (B) terminieren. Des Weiteren bevorzugt weist das lineare Polycarbonat (A) Endgruppen der Formel (2a) und/oder (2b) auf, insbesondere bevorzugt der Formel (2a).

Die Menge an einzusetzendem Kettenabbrecher beträgt bevorzugt 0,1 bis 5 Mol-%, bezogen auf Mole an jeweils eingesetzten Dihydroxyarylverbindungen. Die Zugabe der Kettenabbrecher kann vor, während oder nach der Umsetzung mit einem Kohlensäurederivat erfolgen.

Besonders bevorzugte Polycarbonate (A) sind das Homopolycarbonat auf Basis von Bisphenol A, die Copolycarbonate auf Basis von 1,1-Bis-(4-hydroxyphenyl)-3,3,5-trimethylcyclohexan und 4,4'-Dihydroxydiphenyl sowie die Copolycarbonate auf Basis der beiden Monomere Bisphenol A und 1,1-Bis-(4-hydroxyphenyl)-3,3,5-trimethylcyclohexan, sowie von den Dihydroxyarylverbindungen der Formeln (Ia), (IIa) und (IIIa), abgeleitete Homo- oder Copolycarbonate, insbesondere mit Bisphenol A.

Die Polycarbonate (A) haben bevorzugt gewichtsmittlere Molekulargewichte Mw von 15.000 g/mol bis 40.000

g/mol, weiter bevorzugt bis 34.000 g/mol, besonders bevorzugt von 17.000 g/mol bis 33.000 g/mol, insbesondere von 19.000 g/mol bis 32.000 g/mol, ermittelt durch Gelpermeationschromotographie, kalibriert gegen Bisphenol A-Polycarbonat Standards unter Verwendung von Dichlormethan als Elutionsmittel, Kalibrierung mit linearen Polycarbonaten (aus Bisphenol A und Phosgen) bekannter Molmassenverteilung der PSS Polymer Standards Service GmbH, Deutschland, Kalibrierung nach der Methode 2301-0257502-09D (aus dem Jahre 2009 in deutscher Sprache) der Currenta GmbH & Co. OHG, Leverkusen. Das Elutionsmittel ist Dichlormethan. Säulenkombination aus vernetzten Styrol-Divinylbenzolharzen. Durchmesser der analytischen Säulen: 7,5 mm; Länge: 300 mm. Partikelgrößen des Säulenmaterials: 3 µm bis 20 µm. Konzentration der Lösungen: 0,2 Gew.-%. Flussrate: 1,0 ml/min, Temperatur der Lösungen: 30°C. Verwendung einer UV- und/oder RI-Detektion.

Die Schmelzevolumenfließrate (MVR), bestimmt gemäß ISO 1133-1:2012-03 bei 300°C und 1,2 kg Belastung, beträgt 3 bis 40 $cm^3$/(10 min), bevorzugt 4 bis 35 $cm^3$/(10 min).

Zur Einarbeitung von möglichen Additiven wird die Komponente (A) bevorzugt in Form von Pulvern, Granulaten oder von Gemischen aus Pulvern und Granulaten eingesetzt.

Erfindungsgemäß wird des Weiteren als Komponente (B) ein Polycarbonat mit einem Verzweigungsgrad von 0,8 bis 1,5 mol-% eingesetzt, welches keine Endgruppen der Formel (I) umfasst:

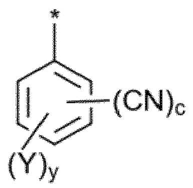

(I),

in der Y jeweils unabhängig für ein Halogen, eine Alkylgruppe mit 1 bis 3 Kohlenstoffatomen, eine Alkoxygruppe mit 1 bis 3 Kohlenstoffatomen, eine Arylalkylgruppe mit 7 bis 12 Kohlenstoffatomen, eine Alkylarylgruppe oder eine Nitrogruppe steht,

y 0 bis 4 ist und c 1 bis 5 ist, unter der Voraussetzung, dass y+c 1 bis 5 ist, und in der

* für die Position steht, mit der die Formel (I) das Polycarbonat (B) terminiert.

Es hat sich erfindungsgemäß herausgestellt, dass der Einsatz der Komponente (B) eine Reduktion der Menge der Komponente (C) ermöglicht und dabei dennoch eine die resultierenden Formkörper der Zusammensetzung gute Flammwidrigkeit, d. h. mindestens eine Flammwidrigkeit nach der Klassifikation UL94 von V-0 bei 2,0 mm, bevorzugt bei 1,5 mm, aufweist. Dabei werden die thermischen Eigenschaften der Zusammensetzung nahezu beibehalten im Vergleich zu einer Zusammensetzung, welche mehr (C), aber kein (B) enthält. Zusätzlich ist die Fließfähigkeit der erfindungsgemäßen Zusammensetzungen besser als die vergleichbarer Zusammensetzungen mit einer höheren Menge an (C) und keinem (B).

Bevorzugt ist es dabei, dass in Formel (I) in Bezug auf Komponente (B) y 1 bis 2 ist und c 1 bis 2 ist. Besonders bevorzugt ist es dabei, dass in Formel (I) y 0 ist und c 1 bis 2 ist. Ganz besonders bevorzugt ist Formel (I) para-Cyanophenyl oder 3,4-Dicyanophenyl.

Erfindungsgemäß bevorzugt ist es des Weiteren, dass das Polycarbonat (B) und gegebenenfalls auch das lineare Polycarbonat (A) Endgruppen der Formel (2a), (2b) und/oder (2c) umfasst:

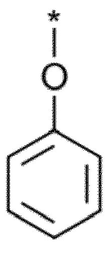

(2a),

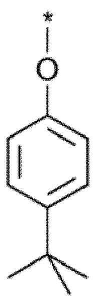

(2b),

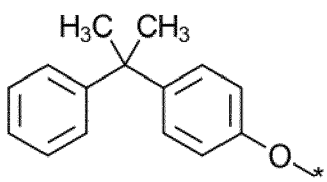

(2c),

wobei * für die Position steht, mit der die Formeln (2a), (2b) und (2c) das jeweilige Polycarbonat (A) und/oder (B) terminieren. Des Weiteren bevorzugt weist das verzweigte Polycarbonat (B) Endgruppen der Formel (2a) und/oder (2b)

auf, insbesondere bevorzugt der Formel (2b).

Dabei ist es insbesondere bevorzugt, dass das lineare Polycarbonat (A) und das verzweigte Polycarbonat (B) Endgruppen der Formel (2a) und/oder (2b) aufweisen. Ganz besonders bevorzugt weist das lineare Polycarbonat (A) Endgruppen der Formel (2a) auf und das verzweigte Polycarbonat (B) Endgruppen der Formel (2b).

Erfindungsgemäß wird bei Komponente (B) oder Polycarbonat (B) auch von verzweigtem Polycarbonat gesprochen. Dieses hat einen Verzweigungsgrad von 0,8 bis 1,5 mol-%, bevorzugt 0,9 bis 1,3 mol-%, ganz besonders bevorzugt von 1,00 bis 1,25 mol-%, besonders bevorzugt von 1,1 bis 1,2 mol-%.

Gemäß der vorliegenden Erfindung ist der Begriff "verzweigt" so zu verstehen, dass das Polycarbonat mehrere Verzweigungspunkte bzw. einen Verzweigungsgrad aufweist. Dieser Verzweigungsgrad wird in mol.-% angegeben und gemäß der folgenden Formel berechnet:

$$\text{mol.-\% (Verzweigungsgrad)} =$$

$$\text{mol (Verzweiger) /(mol(Verzweiger) + (mol (Dihydroxyverbindung))} \bullet 100$$

wobei der "Verzweiger" das Verzweigungsmittel ist, welches mindestens 3 funktionelle Gruppen aufweist und die "Dihydroxyverbindung" die zur Herstellung des Polycarbonats eingesetzte Verbindung mit nur 2 funktionellen Gruppen. Beispielsweise wird in den Beispielen als Verzweiger THPE eingesetzt und die Dihydroxyverbindung ist BPA. Dann ergibt sich:

$$\text{mol-\% (Verzweigungsgrad)} =$$

$$\text{(m(THPE)[g] / M(THPE)[g/mol]) / ((m(THPE)[g] / M(THPE)[g/mol]) + (m(BPA)[g] / M(BPA)[g/mol]))} \bullet 100$$

wobei M(THPE) = 306 g/mol und M(BPA) = 228 g/mol und m(THPE) und m(BPA) für die Masse der entsprechenden Edukte bei der Herstellung des verzweigten Polycarbonats stehen.

Obwohl die mol-% des Verzweigungsgrads auf Basis der eingesetzten Edukte berechnet wird, bezieht sich erfindungsgemäß der Begriff "Verzweigungsgrad" auf die chemische Struktur des Verzweigers/Verzweigungsmittels, wie sie nach der Reaktion im Polycarbonat vorhanden ist. Dabei ist es bevorzugt, dass das Polycarbonat (B) Verzweigungen aufweist, welche ausgewählt sind aus der Gruppe, bestehend aus den Formel (IIa) bis (IIf) und beliebigen Mischungen davon:

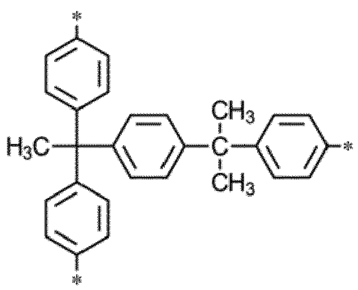

(IIa)

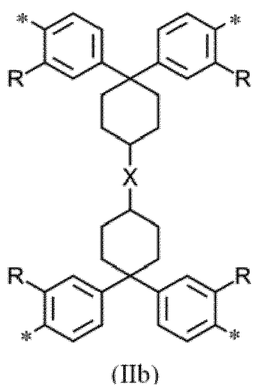

(IIb)

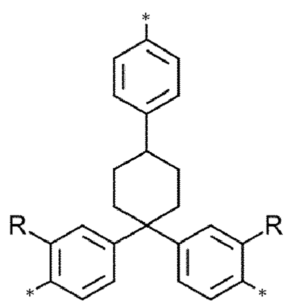

(IIc)

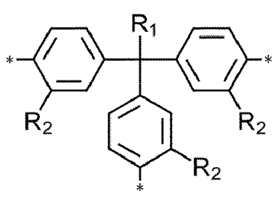

(IId)

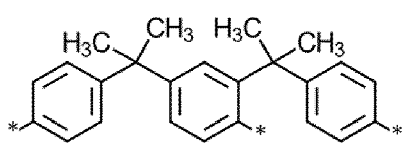

(IIe)

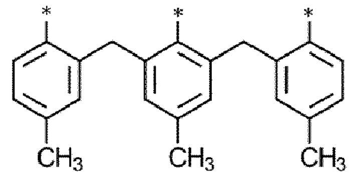

(IIf)

,

wobei * für die Positionen steht, welche die Verzweigungen mit der Polycarbonatkette verbindet und

R jeweils unabhängig voneinander für H und einem Alkyl, bevorzugt H und Methyl steht,

X für ein lineares oder verzweigtes Alkyl oder eine Einfachbindung, bevorzugt $C(CH_3)_2$ oder eine Einfachbindung steht,

$R_1$ jeweils unabhängig voneinander für H und einem Alkyl, bevorzugt H und Methyl steht und $R_2$ jeweils unabhängig voneinander für H und einem Alkyl, bevorzugt H und Methyl steht.

Das verzweigte Polycarbonat (B) kann eine Art der oben gezeigten Verzweigungen aufweisen oder eine Mischung von zwei oder mehreren Verzweigungen. In einer bevorzugten Ausführungsform weist das Polycarbonat (B) Verzweigungen der Formel (IId) auf. Dabei ist es insbesondere bevorzugt, dass $R_1$ und $R_2$ unabhängig voneinander für H oder Alkyl stehen. Besonders bevorzugt steht $R_1$ für Methyl und $R_2$ für H. Eine solche Verzweigungsstruktur resultiert, wenn THPE als Verzweiger eingesetzt wird.

Das Polycarbonat (B) kann bevorzugt durch die oben zu Polycarbonat (A) beschriebenen Wege hergestellt werden. Dabei wird das Polycarbonat (B) jedoch bevorzugt durch das Phasengrenzflächenverfahren hergestellt. Dies ermöglicht es, den Verzweigungsgrad exakt einzustellen.

Für die Herstellung der Polycarbonate (B) geeignete Dihydroxyarylverbindungen sind beispielsweise Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α-α'-Bis-(hydroxyphenyl)-diisopropylbenzole, Phthalimidine, abgeleitet von Isatin- oder Phenolphthaleinderivaten, sowie deren kernalkylierte und kernarylierte Verbindungen.

Bevorzugte Dihydroxyarylverbindungen sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol und 1,1-Bis-(4-hydroxyphenyl)-3,3,5-trimethylcyclohexan, sowie die Bisphenole (Aa) bis (Ca)

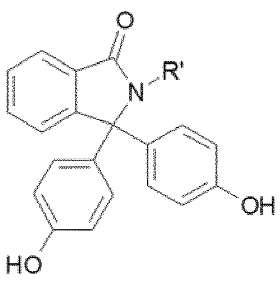

(Aa)

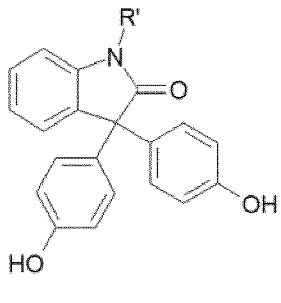

(Ba)

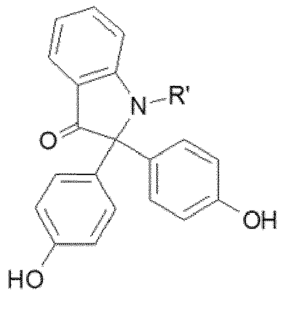

(Ca),

in denen R' jeweils für C1- bis C4-Alkyl, Aralkyl oder Aryl, bevorzugt für Methyl oder Phenyl, ganz besonders bevorzugt für Methyl, steht.

Besonders bevorzugte Bisphenole sind 2,2-Bis-(4-hydroxyphenyl)-propan (Bisphenol A), 2,2-Bis-(3,5-dimethyl-4-hydroxyphenyl)-propan, 1,1 -Bis-(4-hydroxyphenyl)-cyclohexan, 1,1-Bis-(4-hydroxyphenyl)-3,3,5-trimethylcyclohexan, 4,4'-Dihydroxydiphenyl und Dimethyl-Bisphenol A sowie die Bisphenole der Formeln (Aa), (Ba) und (Ca). Ganz besonders bevorzugt ist Bisphenol A.

Wie bereits oben beschrieben, werden Verzweiger/Verzweigungsmittel bei der Synthese des Polycarbonats (B) eingesetzt, um den entsprechenden Verzweigungsgrad zu erhalten. Geeignete Verzweiger sind dabei die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol und 3,3-Bis-(3-methyl-4-hydroxyphenyl)-2-oxo-2,3-dihydroindol.

Insbesondere bevorzugt sind Verzweiger der Formeln (IIIa) bis (IIIf):

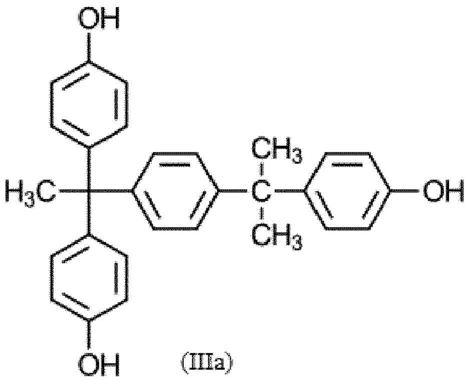

(IIIa)

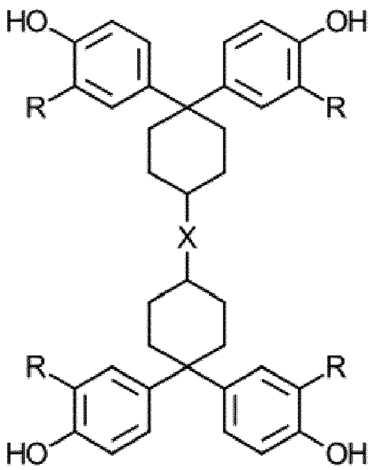

(IIIb)

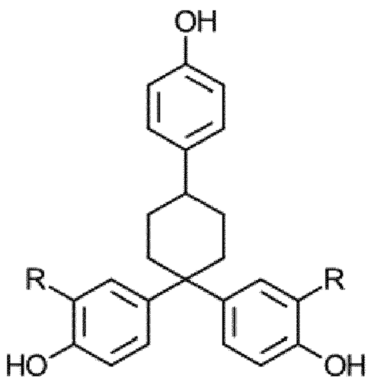

(IIIc)

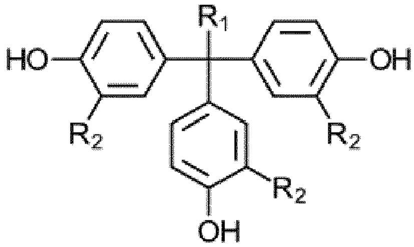

(IIId)

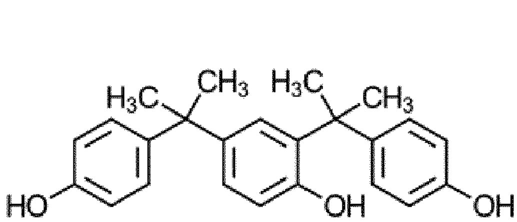

(IIIe)

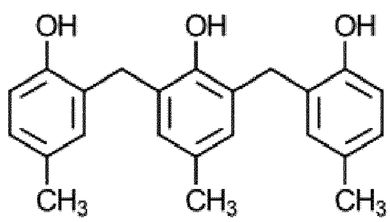

(IIIf)

in denen

R jeweils unabhängig voneinander für H und einem Alkyl, bevorzugt H und Methyl steht,

X für ein lineares oder verzweigtes Alkyl oder eine Einfachbindung, bevorzugt $C(CH_3)_2$ oder eine Einfachbindung steht,

$R_1$ jeweils unabhängig voneinander für H und einem Alkyl, bevorzugt H und Methyl steht und

$R_2$ jeweils unabhängig voneinander für H und einem Alkyl, bevorzugt H und Methyl steht.

Insbesondere bevorzugt wird ein Verzweiger der Formel (IId) verwendet. Dabei ist es insbesondere bevorzugt, dass $R_1$ und $R_2$ unabhängig voneinander für H oder Alkyl stehen. Besonders bevorzugt steht $R_1$ für Methyl und $R_2$ für H.

Die Verzweiger können entweder mit den Dihydroxyarylverbindungen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Dihydroxyarylverbindungen eingesetzt.

Die Polycarbonate (B) weisen bevorzugt gewichtsmittlere Molekulargewichte Mw von 15.000 g/mol bis 40.000 g/mol, weiter bevorzugt 18.000 bis 34.000 g/mol, besonders bevorzugt von 22.000 g/mol bis 33.000 g/mol, insbesondere von 23.000 g/mol bis 32.000 g/mol auf, ermittelt durch Gelpermeationschromotographie, kalibriert gegen Bisphenol A-Polycarbonat Standards unter Verwendung von Dichlormethan als Elutionsmittel, Kalibrierung mit linearen Polycarbonaten (aus Bisphenol A und Phosgen) bekannter Molmassenverteilung der PSS Polymer Standards Service GmbH, Deutschland, Kalibrierung nach der Methode 2301-0257502-09D (aus dem Jahre 2009 in deutscher Sprache) der Currenta GmbH & Co. OHG, Leverkusen. Das Elutionsmittel ist Dichlormethan. Säulenkombination aus vernetzten Styrol-Divinylbenzolharzen. Durchmesser der analytischen Säulen: 7,5 mm; Länge: 300 mm. Partikelgrößen des Säulenmaterials: 3 $\mu$m bis 20 $\mu$m. Konzentration der Lösungen: 0,2 Gew.-%. Flussrate: 1,0 ml/min, Temperatur der Lösungen: 30°C. Verwendung einer UV- und/oder RI-Detektion.

Die Schmelzevolumenfließrate (MVR), bestimmt gemäß ISO 1133-1:2012-03 bei 300°C und 1,2 kg Belastung, beträgt 3 bis 40 $cm^3$/(10 min), bevorzugt 4 bis 35 $cm^3$/(10 min).

Erfindungsgemäß umfasst die Zusammensetzung 15 bis 96 Gew.-% der Komponente (B), bevorzugt 18 bis 95 Gew.-%, besonders bevorzugt 19 bis 85 Gew.-%, ganz besonders bevorzugt 20 bis 80 Gew.-%. Dabei weiß der Fachmann, dass Komponente (B) teurer ist als Komponente (A). Daher wird er versuchen, das Verhältnis von (A) zu (B) so zu optimieren, dass gute Eigenschaften (z. B. ausreichender Flammschutz, gute Verarbeitbarkeit etc.) resultieren, aber für die gewünschten Anwendungen dennoch wirtschaftliche Zusammensetzungen entstehen.

Die erfindungsgemäße Zusammensetzung umfasst des Weiteren als Komponente (C) eine Verbindung, ausgewählt aus der Gruppe von Alkali-, Erdalkali- oder Ammoniumsalzen aliphatischer oder aromatischer Sulfonsäure-, Sulfonamid-, oder Sulfonimidderivate und Kombinationen aus diesen.

Es versteht sich, dass es sich auch um eine Kombination aus zwei oder mehr solcher Flammschutzmittel handeln kann. Ebenso versteht sich, dass es sich dabei auch um zwei oder mehrere Vertreter einer der genannten Verbindungsgruppen handeln kann.

Unter "Derivaten" werden erfindungsgemäß an dieser und anderer Stelle solche Verbindungenverstanden, deren Molekülstruktur an der Stelle eines H-Atoms oder einer funktionellen Gruppe ein anderes Atom oder eine andere Atomgruppe besitzt bzw. bei denen ein oder mehrere Atome/Atomgruppen entfernt wurden. Die Stammverbindung ist somit noch weiterhin erkennbar.

Besonders bevorzugt umfassen erfindungsgemäße Zusammensetzungen als Flammschutzmittel ein oder mehrere Verbindungen, ausgewählt aus der Gruppe, bestehend aus Natrium- oder Kaliumperfluorbutansulfat, Natrium- oder Kaliumperfluormethansulfonat, Natrium- oder Kaliumperfluoroctansulfat, Natrium- oder Kalium-2,5-dichlorbenzolsulfat, Natrium- oder Kalium-2,4,5-trichlorbenzolsulfat, Natrium- oder Kaliumdiphenylsulfonsulfonat, Natrium- oder Kalium-2-formylbenzolsulfonat, Natrium- oder Kalium-(N-benzolsulfonyl)-benzolsulfonamid, teilfluorierte Natrium- oder Kaliumfluoralkylsulfonate oder deren Mischungen.

Bevorzugt werden Natrium- oder Kaliumperfluorbutansulfat, Natrium- oder Kaliumperfluoroctansulfat, Natrium- oder Kaliumdiphenylsulfonsulfonat oder deren Mischungen eingesetzt. Ganz besonders bevorzugt ist Kaliumperfluor-1-butansulfonat, welches kommerziell erhältlich ist, unter anderem als Bayowet® C4 von der Firma Lanxess, Leverkusen, Deutschland.

Die erfindungsgemäßen Zusammensetzungen enthalten dabei 0,040 bis 0,095 Gew.-%, bevorzugt 0,045 bis 0,094 Gew.-%, des Weiteren bevorzugt 0,050 bis 0,093 Gew.-%, des Weiteren bevorzugt 0,055 bis 0,092 Gew.-%, des Weiteren bevorzugt 0,060 bis 0,091 Gew.-%, des Weiteren bevorzugt 0,065 bis 0,090 Gew.-%, des Weiteren bevorzugt 0,070 bis 0,085 Gew.-% der Komponente (C).

Ebenso enthalten die erfindungsgemäßen Zusammensetzung gegebenenfalls eine Verstärkungsfaser als Komponente (D). Diese Verstärkungsfasern können bevorzugt ausgewählt sein aus Glasfasern oder Carbonfasern.

Die Glasfasern basieren üblicherweise auf einer Glaszusammensetzung, ausgewählt aus der Gruppe der M-, E-, A-, S-, R-, AR-, ECR-, D-, Q- oder C-Gläser, wobei E-, S- oder C-Glas bevorzugt sind.

Die Glasfasern können in Form von Schnittglasfasern, sowohl Langfasern als auch Kurzfasern, Mahlfasern, Glasfasergeweben oder Mischungen der vorgenannten Formen eingesetzt werden, wobei die Schnittglasfasern sowie die Mahlfasern bevorzugt eingesetzt werden. Besonders bevorzugt werden Schnittglasfasern eingesetzt.

Die bevorzugte Faserlänge der Schnittglasfasern beträgt vor der Compoundierung 0,5 bis 10 mm, weiter bevorzugt 1,0 bis 8 mm, ganz besonders bevorzugt 1,5 bis 6 mm.

Schnittglasfasern können mit unterschiedlichen Querschnitten eingesetzt werden. Bevorzugt werden runde, elliptische, ovale, 8-förmige und flache Querschnitte eingesetzt, wobei die runden, ovalen sowie flachen Querschnitte besonders bevorzugt sind.

Der Durchmesser eingesetzter Rundfasern vor der Compoundierung beträgt bevorzugt 5 bis 25 μm, weiter bevorzugt 6 bis 20 μm, besonders bevorzugt 7 bis 17 μm, bestimmt mittels lichtmikroskopischer Analyse.

Bevorzugte Flach- und Ovalglasfasern weisen ein Querschnittverhältnis aus Höhe zu Breite von ca. 1,0:1,2 bis 1,0:8,0, bevorzugt 1,0:1,5 bis 1,0:6,0, besonders bevorzugt 1,0:2,0 bis 1,0:4,0 auf.

Bevorzugte Flach- und Ovalglasfasern weisen eine durchschnittliche Faserhöhe von 4 μm bis 17 μm, weiter bevorzugt von 6 μm bis 12 μm und besonders bevorzugt 6 μm bis 8 μm sowie eine durchschnittliche Faserbreite von 12 μm bis 30 μm, weiter bevorzugt 14 μm bis 28 μm und besonders bevorzugt 16 μm bis 26 μm auf. Die Faserabmessungen sind bevorzugt mittels lichtmikroskopischer Analyse bestimmt.

Die Glasfasern sind bevorzugt mit einer Glasschlichte an der Oberfläche der Glasfaser modifiziert. Bevorzugte Glasschlichten umfassen Epoxy-modifizierte, Polyurethanmodifizierte und nichtmodifizierte Silanverbindungen sowie Mischungen der vorgenannten Silanverbindungen. Die Glasfasern können auch nicht mit einer Glasschlichte modifiziert sein.

Die verwendeten Glasfasern zeichnen sich dadurch aus, dass die Auswahl der Faser nicht durch die Wechselwirkungscharakteristik der Faser mit der Polycarbonatmatrix beschränkt ist. Sowohl für eine starke Anbindung an die Polymermatrix als auch bei einer nicht-anbindenden Faser zeigt sich eine Verbesserung der erfindungsgemäßen Eigenschaften der Zusammensetzungen.

Eine Anbindung der Glasfasern an die Polymermatrix ist an den Tieftemperaturbruchoberflächen bei rasterelektronenmikroskopischen Aufnahmen zu erkennen, wobei die größte Anzahl der gebrochenen Glasfasern auf derselben Höhe wie die Matrix gebrochen sind und nur vereinzelt Glasfasern aus der Matrix herausstehen. Rasterelektronenmikroskopische Aufnahmen zeigen für den umgekehrten Fall der nicht-anbindenden Charakteristik, dass die Glasfasern im Tieftemperaturbruch aus der Matrix stark herausstehen oder vollständig herausgeglitten sind.

Erfindungsgemäß können auch Carbonfasern als Verstärkungsfasern eingesetzt werden. Carbonfasern werden industriell üblicherweise aus Vorstufen wie z. B. Polyacrylfasern durch Pyrolyse (Carbonisierung) gewonnen. In den erfindungsgemäßen Zusammensetzungen können Langfasern und Kurzfasern verwendet werden. Bevorzugt werden Kurzfasern eingesetzt.

Die Länge der geschnittenen Fasern liegt bevorzugt zwischen 3 mm und 125 mm. Besonders bevorzugt werden Fasern der Länge 3 mm bis 25 mm eingesetzt.

Neben Fasern mit rundem Querschnitt sind auch Fasern mit kubischer Dimension (plättchenförmig) einsetzbar.

Neben den geschnittenen Fasern werden alternativ bevorzugt gemahlene Carbonfasern eingesetzt. Bevorzugte gemahlene Carbonfasern weisen Längen von 50 μm bis 150 μm auf.

Die Carbonfasern sind gegebenenfalls mit organischen Schlichten gecoatet, um besondere Anbindungen an die Polymermatrix zu ermöglichen. Die bevorzugten Schlichten entsprechen den für Glasfasern genannten.

Kurzschnittfasern und gemahlene Carbonfasern werden den polymeren Basismaterialien üblicherweise durch Compoundierung zugesetzt.

Für Langfäden wird üblicherweise mit Hilfe spezieller technischer Verfahren Kohlenstoff in feinsten Fäden angeordnet. Diese Filamente besitzen üblicherweise einen Durchmesser von 3 bis 10 μm. Aus den Filamenten können auch Rovings, Gewebe, Vliese, Bänder, Schläuche oder Ähnliches hergestellt werden.

Die Verstärkungsfasern (D) können von 0 bis 40 Gew.-%, bevorzugt von 1 bis 35 Gew.-%, besonders bevorzugt von 5 bis 30 Gew.-% und ganz besonders bevorzugt von 9 bis 25 Gew.-% in der erfindungsgemäßen Zusammensetzung enthalten sein.

Dem Fachmann ist bekannt, dass die Anwesenheit der Verstärkungsfasern in der erfindungsgemäßen Zusammensetzung die Flammwidrigkeit der Zusammensetzung bei jeweils gegebener Schmelzeviskosität beeinflusst. Der Fachmann sieht sich in der Lage, sollte kein V-0 bei 2,00 mm, bevorzugt 1,5 mm erzielt werden, insbesondere durch die vorliegende Erfindung die Menge an Polycarbonat (B) in der Zusammensetzung zu erhöhen, so dass eine entsprechende Flammwidrigkeit bei gleichbleibender Schmelzeviskosität von V-0 bei 2,0 mm, bevorzugt 1,5 mm erhalten wird. Erfindungsgemäß ist es bevorzugt, dass Zusammensetzungen ohne eine Verstärkungsfaser (D) eine Flammwidrigkeit von mindestens V-0 bei 2,0 mm aufweisen. Ebenso ist es bevorzugt, dass Zusammensetzung mit einer Verstärkungsfaser (D) eine Flammwidrigkeit von mindestens V-0 bei 1,5 mm aufweisen. Ebenso bevorzugt gleichzeitig ist es bevorzugt,

dass Zusammensetzungen mit einer Verstärkungsfaser (D) eine Flammwidrigkeit von mindestens 5VA bei 3,0 mm aufweisen.

Die erfindungsgemäßen Zusammensetzungen umfassen die Komponenten (A) bis (D) in den angegebenen Gewichtsprozenten, wobei sich die Gewichtsprozente jeweils immer (soweit nicht anders angegeben) auf die Summe der Komponenten (A) bis (D) bezieht.

Bevorzugt umfasst die erfindungsgemäße Zusammensetzung die Komponenten (A) bis (D) in den folgenden Mengen:

4 bis 75 Gew.-% (A), besonders bevorzugt 7 bis 70 Gew.-%, ganz besonders bevorzugt 8 bis 65 Gew.-%

15 bis 85 Gew.-% (B), besonders bevorzugt 20 bis 82 Gew.-%, ganz besonders bevorzugt 25 bis 81 Gew.-%

0,050 bis 0,095 Gew.-% (C), besonders bevorzugt 0,065 bis 0,093 Gew.-%, ganz besonders bevorzugt 0,075 bis 0,091 Gew.-% und

5 bis 30 Gew.-% (D), besonders bevorzugt 6 bis 25 Gew.-%, besonders bevorzugt 7 bis 22 Gew.-% , ganz besonders bevorzugt 9 bis 21 Gew.-%,

wobei sich die Gew.-% auf die Summe der Komponenten (A) bis (D) beziehen.

Ebenso ist es bevorzugt, dass die erfindungsgemäße Zusammensetzung die Komponenten (A) bis (C) in den folgenden Mengen umfasst:

3 bis 85 Gew.-% (A), besonders bevorzugt 5 bis 83 Gew.-%, ganz besonders bevorzugt 6 bis 80 Gew.-%

15 bis 96 Gew.-% (B), besonders bevorzugt 17 bis 94 Gew.-%, ganz besonders bevorzugt 20 bis 93 Gew.-%

0,050 bis 0,095 Gew.-% (C), besonders bevorzugt 0,065 bis 0,093 Gew.-%, ganz besonders bevorzugt 0,075 bis 0,091 Gew.-% und

wobei sich die Gew.-% auf die Summe der Komponenten (A) bis (C) beziehen.

Dabei ist der Begriff "umfassen" bevorzugt als μm Wesentlichen bestehend aus" und ganz besonders bevorzugt als "bestehend aus" zu verstehen.

Die erfindungsgemäße Zusammensetzung ist bevorzugt dadurch gekennzeichnet, dass sie frei von Polytetrafluorethylen (PTFE) ist. PTFE ist als Antitropfmittel bekannt und wird zur Verbesserung der UL94 Klassifizierung häufig in Polycarbonatzusammensetzungen eingesetzt. Es wurde erfindungsgemäß gefunden, dass der Einsatz von PTFE in den Zusammensetzungen nicht notwendig ist und dennoch eine UL94 Klassifikation von V-0 bei 2,00 mm, bevorzugt 1,5 mm erzielt werden kann. PTFE ist dem Fachmann bekannt. PTFE ist in diversen Produktqualitäten kommerziell verfügbar. Hierzu zählen Hostafion® TF2021 oder aber PTFE-Blends wie Blendex® B449 (ca. 50 Gew.-% PTFE und ca. 50 Gew.-% SAN [aus 80 Gew.-% Styrol und 20 Gew.-% Acrylnitril]) der Firma Chemtura.

Ebenso ist es bevorzugt, dass die erfindungsgemäße Zusammensetzung frei von halogenierten Flammschutzmitteln ist. Auch dieses wird als Flammschutzmittel häufig Polycarbonatzusammensetzungen zur Verbesserung ihrer Flammwidrigkeit zugesetzt. Es wurde erfindungsgemäß gefunden, dass der Einsatz von halogenierten Flammschutzmitteln in den Zusammensetzungen nicht notwendig ist und dennoch eine UL94 Klassifikation von V-0 bei 2,00 mm, bevorzugt 1,5 mm erzielt werden kann. Dabei wird erfindungsgemäß bevorzugt auf alle chemischen Verbindungen verzichtet, welche mindestens ein Halogenatom aufweisen. Eines der gängigsten halogenierten Flammschutzmittel ist Tetrabrombisphenol-A oligocarbonat (TBBOC).

Ebenso ist es bevorzugt, dass die erfindungsgemäße Zusammensetzung frei von einem Polysiloxan-Polycarbonat-Blockcokondensat ist. Solche Polysiloxan-Polycarbonat-Blockcokondensate weisen intrinsisch gute Flammschutzeigenschaften auf und werden daher häufig in Polycarbonatzusammensetzungen verwendet. Es wurde erfindungsgemäß gefunden, dass der Einsatz von Polysiloxan-Polycarbonat-Blockcokondensaten in den Zusammensetzungen nicht notwendig ist und dennoch eine UL94 Klassifikation von V-0 bei 2,00 mm, bevorzugt 1,5 mm erzielt werden kann. Dem Fachmann sind Polysiloxan-Polycarbonat-Blockcokondensate bekannt. Diese werden häufig auch als SiCoPC bezeichnet. Sie enthalten in der Regel Siloxanblöcke, die mit Bisphenolen zu entsprechenden Polymeren aufkondensiert werden.

Erfindungsgemäß ist es bevorzugt, dass die Zusammensetzung frei von Polytetrafluorethylen und einem halogenierten Flammschutzmittel ist. Ebenso ist es bevorzugt, dass die Zusammensetzung frei von Polytetrafluorethylen und einem Polysiloxan-Polycarbonat-Blockcokondensat ist. Ebenso ist es bevorzugt, dass die Zusammensetzung frei

von einem halogenierten Flammschutzmittel und einem Polysiloxan-Polycarbonat-Blockcokondensat ist. Ganz besonders bevorzugt ist die erfindungsgemäße Zusammensetzung frei von Polytetrafluorethylen, einem halogenierten Flammschutzmittel und einem Polysiloxan-Polycarbonat-Blockcokondensat.

Erfindungsgemäß ist es des Weiteren bevorzugt, dass die Zusammensetzung zusätzlich

(E) ein cyclisches Siloxan der Formel $(R^1{}_2SiO)_y$ und /oder ein Siloxan, welches eine trifunktionelle Siloxaneinheit der Formel $R^2SiO_{3/2}$ umfasst,

worin $R^1$ jeweils unabhängig für eine monovalente aliphatische oder aromatische Kohlenwasserstoffgruppe oder eine fluorierte Kohlenwasserstoffgruppe mit jeweils 1 bis 18 Kohlenstoffatomen steht und y eine Zahl von 3 bis 12 ist beziehungsweise

worin $R_2$ jeweils unabhängig für Wasserstoff, eine monovalente aliphatische oder aromatische Kohlenwasserstoffgruppe mit jeweils 1 bis 18 Kohlenstoffatomen oder eine monovalente Alkoxygruppe mit 1 bis 18 Kohlenstoffatomen steht.

Handelt es sich bei (E) um ein Siloxan der Formel $(R^1{}_2SiO)_y$, so ist es bevorzugt, dass die fluorierte Kohlenwasserstoffgruppe, für die $R^1$ stehen kann, ausgewählt wird aus der Gruppe, bestehend aus 3-Fluorpropyl, 3,3,3-Trifluorpropyl, 5,5,5,4,4,3,3-Heptafluorpentyl, Fluorphenyl, Difluorphenyl und Trifluortolyl. Besonders bevorzugt handelt es sich bei dem cyclischen Siloxan der Formel $(R^1{}_2SiO)_y$ um Octamethylcyclotetrasiloxan, 1,2,3,4-Tetramethyl-1,2,3,4-tetravinylcyclotetrasiloxan, 1,2,3,4-Tetramethyl-1,2,3,4-Tetraphenylcyclotetrasiloxan, Octaethylcyclotetrasiloxan, Octypropylcyclotetrasiloxan, Octybutylcyclotetrasiloxan, Decamethylcyclopentasiloxan, Dodecamethylcyclohexasiloxan, Tetradecamethylcycloheptasiloxan, Hexadecamethylcyclooctasiloxan, Eicosamethylcyclodecasiloxan, Octaphenylcyclotetrasiloxan. Besonders bevorzugt ist dabei Octaphenylcyclotetrasiloxan.

Handelt es sich bei (E) um ein Siloxan, welches eine trifunktionelle Siloxaneinheit der Formel $R^2SiO_{3/2}$ umfasst, ist es bevorzugt, dass dieses Siloxan diese Formel zu mindestens 90 mol.-%, besonders bevorzugt zu mindestens 95 mol.-% und ganz besonders bevorzugt zu 100 mol.-% umfasst, bezogen auf die Gesamtheit der mole an Siloxaneinheiten (M Einheit, D Einheit, T Einheit, Q Einheit). Dabei stellt die Formel $R^2SiO_{3/2}$ eine T Einheit dar. Wie dem Fachmann bekannt, stellt eine M Einheit die Formel $T_3SiO_{1/2}$ dar (worin R Wasserstoff oder eine monovalente organische Gruppe darstellt), D stellt eine bifunktionelle Einheit der Formel $R_2SiO$ dar (worin R Wasserstoff oder eine monovalente organische Gruppe darstellt) und eine Q Einheit stellt eine tetrafunktionelle Siloxaneinheit der Formel $SiO_2$ dar.

Diese trifunktionelle Siloxaneinheit der Formel $R^2SiO_{3/2}$ ist auch als Polysilsequioxan bekannt. Sie kann neben den T Einheiten auch M Einheiten aufweisen. Die Strukturen sind dabei dem Fachmann bekannt. Sie können verbrückende Strukturen oder Käfigstrukturen aufweisen.

Bevorzugt ist $R_2$ dabei ausgewählt aus Wasserstoff, $C_1$-$C_{12}$-Alkyl, $C_1$-$C_{12}$ Alkenyl, $C_1$-$C_{12}$-Alkoxy, $C_1$-$C_{12}$-Acyl, $C_3$-$C_8$-Cycloalkyl oder Phenyl. Besonders bevorzugt wird $R_2$ ausgewählt aus $C_1$-$C_6$-Alkyl, $C_1$-$C_6$-Alkenyl, $C_1$-$C_6$-Alkoxy und Phenyl. Des Weiteren bevorzugt wird $R_2$ ausgewählt aus Methyl, Ethyl, Propyl, Butyl und Hexyl. Besonders bevorzugt stellt $R_2$ Methyl dar. Besonders bevorzugt sind Polymethylsilsesquioxan und Octymethylsilsesquioxan.

Es ist bevorzugt, dass (E), falls vorhanden, in der erfindungsgemäßen Zusammensetzung in Mengen von 0,5 bis 2,5 Gew.-%, besonders bevorzugt von 0,75 bis 2,15 Gew.-% und ganz besonders bevorzugt von 0, 9 bis 1,5 Gew.-% eingesetzt wird.

Ebenso ist es erfindungsgemäß bevorzugt, dass die Zusammensetzung zusätzlich

(F) mindestens ein weiteres Additiv ausgewählt aus der Gruppe, bestehend aus Thermostabilisatoren, Entformungsmitteln, UV-Absorbern, Verträglichkeitsvermittlern, Antioxidantien, IR-Absorbern, Fließverbesserer, Umesterungsstabilisatoren, Additive für die Lasermarkierung, Schlagzähmodifikatoren, lichtstreuende Diffusionsadditive und Farbmitteln umfasst.

Solche Additive, wie sie üblicherweise bei Polycarbonaten zugesetzt werden, sind beispielsweise in EP-A 0 839 623, WO-A 96/15102, EP-A 0 500 496 oder "Plastics Additives Handbook", Hans Zweifel, 5th Edition 2000, Hanser Verlag, München beschrieben. Diese Additive können einzeln oder auch im Gemisch zugesetzt werden. Es versteht sich, dass nur solche Additive und nur in solchen Mengen zugesetzt werden dürfen, wenn sie sich nicht signifikant negativ auf den erfindungsgemäßen Effekt der guten Flammwidrigkeit auswirken.

Als Thermostabilisatoren eignen sich bevorzugt Triphenylphosphin, Tris-(2,4-di-tert-butylphenyl)phosphit (Irgafos® 168), Tetrakis-(2,4-di-tert-butylphenyl)-[1,1-biphenyl]-4,4'-diylbisphosphonit, Octadecyl-3-(3,5-di-tert-butyl-4-hydroxyphenyl)-propionat (Irganox® 1076), Bis-(2,4-dicumylphenyl)-pentaerythritoldiphosphit (Doverphos® S-9228 PC), Bis-(2,6-di-tert-butyl-4-methylphenyl)-pentaerythritoldiphosphit (ADK STAB PEP-36). Sie werden allein oder im Gemisch (z. B. Irganox® B900 (Gemisch aus Irgafos® 168 und Irganox® 1076 im Verhältnis 4:1) oder Doverphos® S-9228 PC mit Irganox® B900 bzw. Irganox® 1076) eingesetzt.

Als Entformungsmittel kommen insbesondere Pentaerythritoltetrastearat (PETS) bzw. Glycerinmonostearat

(GMS) in Frage.
Die UV-Absorber weisen eine möglichst geringe Transmission unterhalb 400 nm und eine möglichst hohe Transmission oberhalb von 400 nm auf. Für den Einsatz in der erfindungsgemäßen Zusammensetzung besonders geeignete Ultraviolett-Absorber sind Benzotriazole, Triazine, Benzophenone und/oder arylierte Cyanoacrylate.

Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin® 234, BASF SE, Ludwigshafen), 2-(2'-Hydroxy-5'-(tert.-octyl)-phenyl)-benzotriazol (Tinuvin® 329, BASF SE, Ludwigshafen), Bis-(3-(2H-benztriazolyl)-2-hydroxy-5-tert.-octyl)methan (Tinuvin® 360, BASF SE, Ludwigshafen), 2-(4,6-Diphenyl-1,3,5-triazin-2-yl)-5-(hexyloxy)-phenol (Tinuvin® 1577, BASF SE, Ludwigshafen), sowie Benzophenone wie 2,4-Dihydroxybenzophenon (Chimasorb® 22 , BASF SE, Ludwigshafen) und 2-Hydroxy-4-(octyloxy)-benzophenon (Chimassorb® 81, BASF SE, Ludwigshafen), 2,2-Bis[[(2-cyano-1-oxo-3,3-diphenyl-2-propenyl)oxy]-methyl]-1,3-propandiylester (9CI) (Uvinul® 3030, BASF SE, Ludwigshafen), 2-[2-Hydroxy-4-(2-ethylhexyl)oxy]phenyl-4,6-di(4-phenyl)phenyl-1,3,5-triazine (Tinuvin® 1600, BASF SE, Ludwigshafen), Tetraethyl-2,2'-(1,4-phenylendimethyliden)-bismalonat (Hostavin® B-Cap, Clariant AG) oder N-(2-Ethoxyphenyl)-N'-(2-ethylphenyl)-ethandiamid (Tinuvin® 312, CAS-Nr. 23949-66-8, BASF SE, Ludwigshafen).

Besonders bevorzugte spezielle UV-Stabilisatoren sind Tinuvin® 360, Tinuvin® 329, Tinuvin® 312, Tinuvin® 326 und/oder Tinuvin® 1600, ganz besonders bevorzugt sind Tinuvin® 329, Tinuvin® 326 und/oder Tinuvin® 360.

Es können auch Mischungen der genannten Ultraviolett-Absorber eingesetzt werden.

Sofern UV-Absorber enthalten sind, enthält die Zusammensetzung bevorzugt Ultraviolett-Absorber in einer Menge bis 0,8 Gew.-%, bevorzugt 0,05 Gew.-% bis 0,5 Gew.-%. Gängige Schlagzähmodifikatoren, wie z.B. Polyethylenwachse, sind dem Fachmann bekannt.

Übliche lichtstreuende Diffusionsadditive, wie z.B. Polyacrylate, Copolyacrylate oder Polysilsesquioxane, sind dem Fachmann ebenfalls bekannt. Die Farbmittel sind dem Fachmann bekannt. Sie umfassen bevorzugt sowohl Pigmente, insbesondere Titandioxid, und/oder organische Farbmittel. Wenn Titandixoid in der Zusammensetzung enthalten ist, ist es bevorzugt bis zu 15 Gew.-%, ganz besonders bevorzugt bis zu 3 Gew.-% ebenso bevorzugt bis zu 2 Gew.-% bezogen auf die Gesamtzusammensetzung enthalten. Alternativ kann das Titandioxid auch von 3 bis 15 Gew.-%, bevorzugt 7 bis 15 Gew.-% bezogen auf die Gesamtzusammensetzung enthalten sein. Der Fachmann weiß, dass Titandioxid Einfluss auf die Flammwidrigkeit der Zusammensetzung haben kann. Daher sind Farben, welche dadurch erhalten werden, dass sie unter anderem Titandioxid enthalten, für eine Erzielung von mindestens V-0 bei 2,00 mm, bevorzugt 1,50 mm besonders herausfordernd.

Umfasst die erfindungsgemäße Zusammensetzung die Komponente(n) (E) und /oder (F), so beziehen sich die angegebenen Mengen jeweils auf die Summe der vorhandenen Komponenten (A) bis (E) und/ oder (F).

Bevorzugt umfasst, bevorzugt besteht aus, die erfindungsgemäße Zusammensetzung die Komponenten (A) bis (F) in den folgenden Mengen:

4 bis 75 Gew.-% (A), besonders bevorzugt 7 bis 70 Gew.-%, ganz besonders bevorzugt 8 bis 65 Gew.-%

15 bis 85 Gew.-% (B), besonders bevorzugt 20 bis 82 Gew.-%, ganz besonders bevorzugt 25 bis 81 Gew.-%

0,050 bis 0,095 Gew.-% (C), besonders bevorzugt 0,065 bis 0,093 Gew.-%, ganz besonders bevorzugt 0,075 bis 0,091 Gew.-%

5 bis 30 Gew.-% (D), besonders bevorzugt 6 bis 25 Gew.-%, besonders bevorzugt 7 bis 22 Gew.-% , ganz besonders bevorzugt 9 bis 21 Gew.-%,

0 bis 2,5 Gew.-% (E), besonders bevorzugt 0,5 bis 2,2 Gew.-% (E), ganz besonders bevorzugt 0,75 bis 1,5 Gew.-% (E), und

0 bis 3 Gew.-% (F), besonders bevorzugt 1 bis 2,5 Gew.-% (F), ganz besonders bevorzugt 1,3 bis 2,0 Gew.-% (F)

wobei sich die Gew.-% auf die Summe der Komponenten (A) bis (F) beziehen.

Dabei ist es besonders bevorzugt, dass die erfindungsgemäße Zusammensetzung aus den Komponenten (A) bis (F) besteht.

Das UL94 Prüfverfahren beziehungsweise die entsprechende Klassifizierung ist dem Fachmann bekannt. Dabei handelt es sich in dem einen Fall um das Brandverhalten UL94 V bei 50 W, 20 mm Vertikal. Dieses Prüfverfahren wird bei der Ermittlung der Brennbarkeitsklassen UL 94 V-0, V-1, V-2 eingesetzt. Der andere Fall wird in der Klasse UL 5V beschrieben. Die Klassifizierung in Brennbarkeitsklassen erfolgt durch Bewertung der Nachbrenn- und Nachglühzeit sowie des brennenden Abtropfens des Probekörpers.

Die Klassifizierung erfolgt für die geprüfte Probekörperdicke in die Stufen V-0, V-1, V-2, 5VA und 5VB (Vertikalbrennprüfung). Diese stehen - geordnet nach der Höhe der Anforderung - im Einzelnen für:

- V-2: Verlöschen einer vertikal eingespannten Probe innerhalb von 30 Sekunden. Brennendes Abtropfen von Kunststoffschmelze zulässig.
- V-1: wie V-2, jedoch kein brennendes Abtropfen von Kunststoffschmelze zulässig. Maximal 60 Sekunden Nachglimmen.
- V-0: wie V-1, jedoch Verlöschen der Flamme innerhalb von 10 Sekunden. Maximal 30 Sekunden Nachglimmen.

Kunststoffe, die mindestens die Klassifizierung V-2 erfüllen, können zusätzlich mit der 500-Watt-Flamme (125 mm Flammhöhe) geprüft werden:

- 5VB: Verlöschen einer vertikal eingespannten Probe nach fünfmaliger Beflammung für je fünf Sekunden; kein Abtropfen zulässig.
- 5VA: wie 5VB, zusätzlicher Test an einer horizontal eingespannten Platte; weder Abtropfen noch Bildung von Brandlöchern mit einem Durchmesser > 1 mm sind zulässig.

Die Vorbehandlung der Probestäbe für UL94V erfolgt dabei:

2 Tage / 23 °C / 50 % rel. Feuchte

7 Tage / 70 °C / Umluftofen

Flammenhöhe: 20 mm

Beflammungszeit: 2 x 10 s

Die zweite Beflammung der Probe beginnt unmittelbar nach Beendigung der 1. Nachbrennzeit.
Folgende Bedingungen gelten für das Brandverhalten UL94 5V:
500 W, 125 mm Vertikal
Dieses Verfahren kommt bei der Ermittlung der Brennbarkeitsklassen UL 94-5VA und -5VB zum Einsatz.
Hierbei wird das Brennverhalten an Stäben sowie eine eventuelle Lochbildung an Platten beurteilt Vorbehandlung:

2 Tage / 23 °C / 50 % rel. Feuchte.

7 Tage / 70 °C / Umluftofen

Ebenso ist Gegenstand der vorliegenden Erfindung die Verwendung eines Polycarbonats (B) mit einem Verzweigungsgrad von 0,8 bis 1,5 mol-%,welches keine Endgruppen der Formel (I) umfasst:

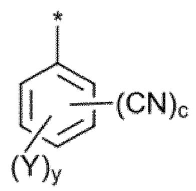

(I),

in der Y jeweils unabhängig für ein Halogen, eine Alkylgruppe mit 1 bis 3 Kohlenstoffatomen, eine Alkoxygruppe mit 1 bis 3 Kohlenstoffatomen, eine Arylalkylgruppe mit 7 bis 12 Kohlenstoffatomen, eine Alkylarylgruppe oder eine Nitrogruppe steht,
y 0 bis 4 ist und c 1 bis 5 ist, unter der Voraussetzung, dass y+c 1 bis 5 ist, und in der
* für die Position steht, mit der die Formel (I) das Polycarbonat (B) terminiert,

in einer Zusammensetzung, enthaltend

(A) lineares Polycarbonat,

(C) ein Alkali-, Erdalkali- oder Ammoniumsalz aliphatischer oder aromatischer Sulfonsäure-, Sulfonamid-, oder Sulfonimidderivate oder Kombinationen aus diesen und

(D) gegebenenfalls eine Verstärkungsfaser,

zur Erzielung einer V-0 Klassifikation nach UL94 bei 2,00 mm, bevorzugt 1,5 mm Schichtdicke, wobei der Gehalt an Komponente (C) in der Zusammensetzung 0,05 bis 0,095 Gew.-% beträgt.

Bei den angegebenen Komponenten (A) bis (D) handelt es sich dabei bevorzugt um die bereits oben beschriebenen erfindungsgemäßen Komponenten (A) bis (D). Besonders bevorzugt handelt es sich bei der Zusammensetzung um die erfindungsgemäße Zusammensetzung in sämtlichen oben beschriebenen Bevorzugungen und Kombinationen von Bevorzugungen, insbesondere in den oben genannten Mengenverhältnissen.

Es wurde überraschenderweise gefunden, dass durch den Zusatz des verzweigten Polycarbonats (B) die Menge an Komponente (C) in der Zusammensetzung reduziert werden konnte, aber dennoch mindestens eine UL94 Klassifikation von V-0 bei einer Schichtdicke von 2,0 mm, bevorzugt 1,5 mm resultierte. Zusätzlich wurde gefunden, dass die erfindungsgemäßen Zusammensetzungen mit der Komponente (B) eine verbesserte Fließfähigkeit und damit bessere Verarbeitbarkeit aufweisen als vergleichbare Zusammensetzung mit einem höheren Gehalt an (C). Ebenso bleiben die thermischen Eigenschaften der erfindungsgemäßen Zusammensetzung mit der Komponente (B) nahezu vergleichbar zu denen mit höheren Gehalten an (C).

Dabei ist es insbesondere bevorzugt, dass das lineare Polycarbonat (A) keine Endgruppen der Formel (I) umfasst:

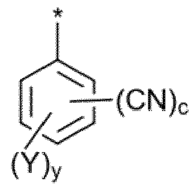

(I),

in der Y, y und c wie oben definiert sind.

## Beispiele

Die in den folgenden Beispielen beschriebenen Polycarbonat-basierten Zusammensetzungen wurden auf einem Extruder ZE 25 der Fa. Berstorff mit einem Durchsatz von 10 kg/h durch Compoundierung hergestellt. Die Schmelzetemperatur betrug 275 - 350°C.

Komponente PC-A1: Lineares Polycarbonat auf Basis von Bisphenol A und Phenol als Kettenabbrecher mit einer Schmelze-Volumenfließrate MVR von 9 $cm^3$/(10 min) (gemäß ISO 1133:2012-03, bei einer Prüftemperatur 300°C und 1,2 kg Belastung). Enthält geringe Mengen TPP.

Komponente PC-A2: Lineares Polycarbonat in Pulverform auf Basis von Bisphenol A und Phenol als Kettenabbrecher mit einer Schmelze-Volumenfließrate MVR von 6 $cm^3$/(10 min) (gemäß ISO 1133:2012-03, bei einer Prüftemperatur von 300°C und 1,2 kg Belastung).

Komponente PC-A3: Lineares Polycarbonat in Pulverform auf Basis von Bisphenol A und Phenol als Kettenabbrecher mit einer Schmelze-Volumenfließrate MVR von 19 $cm^3$/(10 min) (gemäß ISO 1133:2012-03, bei einer Prüftemperatur von 300°C und 1,2 kg Belastung).

Komponente PC-A4: Lineares Polycarbonat auf Basis von Bisphenol A und Phenol als Kettenabbrecher mit einer Schmelze-Volumenfließrate MVR von 9 $cm^3$/(10 min) (gemäß ISO 1133:2012-03, bei einer Prüftemperatur 300°C und 1,2 kg Belastung). Enthält kein TPP.

Komponente PC-B: verzweigtes Polycarbonat auf Basis von Bisphenol A und 1,1,1-Tri-(4-hydroxyphenyl)-ethan

(THPE) als Verzweiger (1,3 Gew-%) und p-tert.-Butylphenol (BUP) als Kettenabbrecher mit einer Schmelze-Volumenfließrate MVR von 6 $cm^3$/(10 min) (gemäß ISO 1133:2012-03, bei einer Prüftemperatur 300°C und 1,2 kg Belastung).

Komponente C1: Kaliumperfluorbutansulfonat (auch Rimarsalz oder C4-Salz genannt) der Fa. Lanxess AG, Deutschland.

Komponente D1: Chopped strand nicht-anbindende Glasfaser CS108F-14P der Fa. 3B-Fibreglass sprl Belgium.

Komponente D2: Chopped strand nicht-anbindende Glasfaser CS13720 der Fa. 3B-Fibreglass sprl Belgium.

Komponente E1: Octaphenylcycloterasiloxan (OPCTS) der Fa. Shin-Etsu Co, Ltd. Japan.

Komponente F1: Entformungsmittel Pentaerythritoltetrastearat (PETS, Loxiol P 861/3.5 Special) der Fa. Emery Oleochemicals GmbH Germany.

Komponente F2: Gelber Farbstoff MACROLEX YELLOW 3G GRAN der Fa. Lanxess, Deutschland.

Komponente F3: Roter Farbstoff COLORTHERM RED 130 M der Fa. Lanxess, Deutschland.

Komponente F4: Schwarzpigment Ruß LAMP BLACK 101 der fa. Evonik, Deutschland.

Komponente F5: Weißpigment Titandioxid KRONOS 2230 der Fa. Kronos Titan GmbH, Deutschland.

Komponente F6: Triphenylphosphin (TPP) der Fa. BASF SE, Deutschland.

Komponente F7: UV-Absorber Tinuvin 329 der Fa. BASF SE, Deutschland.

Komponente F8: Disflamoll TOF (Tris-isooctylphosphat) der Fa. Lanxess, Deutschland.

Komponente F9: Gelbpigment Heucodur Yellow 3R der Fa. Heubach GmbH, Deutschland.

Komponente F10: Eisenoxid-Rotpigment Bayferrox 110 M der Fa. Lanxess, Deutschland.

Die Bestimmung der **Schmelze-Volumenfließrate** (MVR) erfolgte nach ISO 1133:2012-03 (überwiegend bei einer Prüftemperatur von 300 °C, Masse 1,2 kg) mit dem Gerät Zwick 4106 der Firma Zwick Roell. Zusätzlich wurde der MVR-Wert nach 20 Minuten Vorwärmzeit gemessen (IMVR20'). Dies ist ein Maß für die Schmelzestabilität unter erhöhtem thermischem Stress.

Die Bestimmung der **Scherviskosität** (Schmelzeviskosität) erfolgte in Anlehnung an ISO 11443:2005 mit dem Gerät Visco-Robo 45.00 der Fa. Göttfert.

Das **Brandverhalten** wurde nach UL 94 V (50 W, 20 mm Vertical) bestimmt. Vorbehandlung der Probestäbe:

2 Tage / 23 °C / 50 % rel. Feuchte
7 Tage / 70 °C / Umluftofen
Flammenhöhe: 20 mm
Beflammungszeit: 2 x 10 s

Die zweite Beflammung der Probe beginnt unmittelbar nach Beendigung der 1. Nachbrennzeit

Folgende Bedingungen gelten für das Brandverhalten UL94 5V:
500 W, 125 mm Vertikal

Dieses Verfahren kommt bei der Ermittlung der Brennbarkeitsklassen UL 94-5VA und -5VB zum Einsatz.

Hierbei wird das Brennverhalten an Stäben sowie eine eventuelle Lochbildung an Platten beurteilt
Vorbehandlung:

2 Tage / 23 °C / 50 % rel. Feuchte.

7 Tage / 70 °C / Umluftofen

Die **Vicat-Erweichungstemperatur** VST/B50 bzw. VST/B 120 als Maß für die Wärmeformbeständigkeit wurde gemäß ISO 306:2014-3 an Prüfkörpern der Abmessung 80 mm x 10 mm x 4 mm mit einer Stempellast von 50 N und einer Aufheizgeschwindigkeit von 50°C/h bzw. 120°C/h mit dem Gerät Coesfeld Eco 2920 der Firma Coesfeld Materialtest bestimmt.

Die **Heat Deflection Temperature (HDT)** als Maß für die Wärmeformbeständigkeitstemperatur wurde gemäß DIN EN ISO 75-1:2013-08 an Prüfkörpern der Abmessung 80 mm x 10 mm x 4 mm mit einer Last von 1,8 MPa (HDT A) oder 0,45 MPa (HDT B) mit dem Gerät HDT Vollautomat der Firma Coesfeld gemessen.

Die **Bestimmung des Asche-Gehaltes** erfolgte nach DIN 51903:2012-11 (850°C, 30 min halten).

Tabelle 1

| Komponente | | V1 | E1 | E2 | E3 | E4 | E5 | E6 | E7 |
|---|---|---|---|---|---|---|---|---|---|
| PC-A1 (Gew.-%) | | 78,404124 | 58,751219 | 57,763140 | 38,989625 | 38,001546 | - | - | - |
| PC-A2 (Gew.-%) | | 9,880797 | 9,880797 | 9,880797 | 9,880797 | 9,880797 | 9,880797 | 9,880797 | 9,880797 |
| PC-B (Gew.-%) | | - | 19,761594 | 19,761593 | 39,523188 | 39,523187 | 78,512813 | 77,524733 | 76,536654 |
| C (Gew.-%) | | 0,197616 | 0,088927 | 0,088927 | 0,088927 | 0,088927 | 0,088927 | 0,088927 | 0,088927 |
| D1 (Gew.-%) | | 9,880797 | 9,880797 | 9,880797 | 9,880797 | 9,880797 | 9,880797 | 9,880797 | 9,880797 |
| E1 (Gew.-%) | | - | - | 0,988080 | - | 0,988080 | - | 0,988080 | 1,976159 |
| F1 (Gew.-%) | | 0,444636 | 0,444636 | 0,444636 | 0,444636 | 0,444636 | 0,444636 | 0,444636 | 0,444636 |
| F2 (Gew.-%) | | 0,000563 | 0,000563 | 0,000563 | 0,000563 | 0,000563 | 0,000563 | 0,000563 | 0,000563 |
| F3 (Gew.-%) | | 0,001502 | 0,001502 | 0,001502 | 0,001502 | 0,001502 | 0,001502 | 0,001502 | 0,001502 |
| F4 (Gew.-%) | | 0,004269 | 0,004269 | 0,004269 | 0,004269 | 0,004269 | 0,004269 | 0,004269 | 0,004269 |
| F5 (Gew.-%) | | 1,185696 | 1,185696 | 1,185696 | 1,185696 | 1,185696 | 1,185696 | 1,185696 | 1,185696 |
| | | | | | | | | | |
| MVR ($cm^3$/[10min]) | 300 °C; 1,20 kg; 6 min | 7,2 | 5,9 | 6,3 | 5 | 5,8 | 4,1 | 3,9 | 4,4 |
| MVR ($cm^3$/[10min]) | 300 °C; 1,20 kg; 19 min | 7,8 | 6,1 | 6,9 | 5,4 | 6,1 | 4,2 | 5 | 5,1 |
| | | | | | | | | | |
| Schmelzeviskosität in Pas | | | | | | | | | |
| Viskosität 1 (50 s-1) (ro) | 300 °C | 662 | 683 | 621 | 672 | 690 | 764 | 689 | 676 |
| Viskosität 2 (100 s-1) (ro) | | 592 | 622 | 535 | 579 | 571 | 617 | 605 | 581 |
| Viskosität 3 (200 s-1) (ro) | | 486 | 524 | 462 | 485 | 486 | 481 | 473 | 451 |

(fortgesetzt)

| Komponente | | V1 | E1 | E2 | E3 | E4 | E5 | E6 | E7 |
|---|---|---|---|---|---|---|---|---|---|
| Viskosität 4 (500 s-1) (ro) | | 378 | 387 | 355 | 354 | 361 | 343 | 325 | 328 |
| Viskosität 5 (1000 s-1) (ro) | | 306 | 300 | 282 | 275 | 271 | 251 | 244 | 251 |
| Viskosität 6 (1500 s-1) (ro) | | 260 | 252 | 239 | 230 | 224 | 210 | 203 | 201 |
| Viskosität 7 (5000 s-1) (ro) | | 130 | 126 | 120 | 116 | 113 | 107 | 105 | 101 |
| | | | | | | | | | |
| Viskosität 1 (50 s-1) (ro) | 280 °C | 1114 | 1160 | 1176 | 1167 | 1148 | 1289 | 1169 | 1172 |
| Viskosität 2 (100 s-1) (ro) | | 972 | 1002 | 962 | 982 | 946 | 1009 | 919 | 942 |
| Viskosität 3 (200 s-1) (ro) | | 825 | 828 | 792 | 801 | 766 | 774 | 717 | 719 |
| Viskosität 4 (500 s-1) (ro) | | 642 | 613 | 585 | 582 | 559 | 520 | 490 | 490 |
| Viskosität 5 (1000 s-1) (ro) | | 479 | 455 | 435 | 432 | 406 | 378 | 356 | 347 |
| Viskosität 6 (1500 s-1) (ro) | | 385 | 362 | 353 | 347 | 327 | 302 | 286 | 273 |
| Viskosität 7 (5000 s-1) (ro) | | 173 | 165 | 161 | 158 | 150 | 142 | 135 | 131 |
| | | | | | | | | | |

(fortgesetzt)

| Komponente | | V1 | E1 | E2 | E3 | E4 | E5 | E6 | E7 |
|---|---|---|---|---|---|---|---|---|---|
| Viskosität 1 (50 s-1) (ro) | 260 °C | 2029 | 2071 | 1881 | 2125 | 2019 | 2117 | 2059 | 1854 |
| Viskosität 2 (100 s-1) (ro) | | 1757 | 1751 | 1558 | 1745 | 1638 | 1608 | 1558 | 1434 |
| Viskosität 3 (200 s-1) (ro) | | 1500 | 1452 | 1315 | 1407 | 1297 | 1220 | 1173 | 1098 |
| Viskosität 4 (500 s-1) (ro) | | 1046 | 1015 | 915 | 950 | 872 | 801 | 771 | 726 |
| Viskosität 5 (1000 s-1) (ro) | | 702 | 685 | 622 | 644 | 590 | 551 | 534 | 503 |
| Viskosität 6 (1500 s-1) (ro) | | 541 | 528 | 480 | 500 | 455 | 432 | 419 | 394 |
| Viskosität 7 (5000 s-1) (ro) | | 226 | 221 | 206 | 213 | 196 | 188 | 185 | 173 |
| | | | | | | | | | |
| Vicat (°C) | VST B - (50N); 50 K/h | 142,4 | 142,5 | 140,4 | 142,5 | 140,2 | 141,9 | 140,2 | 139,1 |
| HDT (°C) | A (Biegespannung = 1,8N/mm 2) | 132,2 | 132,6 | 131,2 | 133,4 | 131 | 133,1 | 131,3 | 130,4 |
| | | | | | | | | | |
| UL94-V | 1,80 mm | V-0 | V-0 | V-0 | V-0 | V-0 | V-0 | V-0 | V-0 |
| 48h/168h | | V-0/V-0 | V-0/V-0 | V-0/V-0 | V-0/V-0 | V-0/V-0 | V-0/V-0 | V-0/V-0 | V-0/V-0 |
| V0/V1/V2/durchgefallen (Anzahl) | | 10/0/0/0 | 10/0/0/0 | 10/0/0/0 | 10/0/0/0 | 10/0/0/0 | 10/0/0/0 | 10/0/0/0 | 10/0/0/0 |
| Nachbrennzeit (s) | | N;23/N;25 | N;20/N;35 | N;27/N;31 | N;27/N;25 | N;18/N;24 | N;17/N;28 | N;20/N;27 | N;23/N;31 |
| | | | | | | | | | |

(fortgesetzt)

| Komponente | | V1 | E1 | E2 | E3 | E4 | E5 | E6 | E7 |
|---|---|---|---|---|---|---|---|---|---|
| UL94-V | 1,50 mm | V-0 | V-0 | V-0 | V-0 | V-0 | V-0 | V-0 | V-0 |
| 48h/168h | | V-0/V-0 | V-0/V-0 | V-0/V-0 | V-0/V-0 | V-0/V-0 | V-0/V-0 | V-0/V-0 | V-0/V-0 |
| V0/V1/V2/durchgefallen (Anzahl) | | 10/0/0/0 | 10/0/0/0 | 10/0/0/0 | 10/0/0/0 | 10/0/0/0 | 10/0/0/0 | 10/0/0/0 | 10/0/0/0 |
| Nachbrennzeit (s) | | N;23/N;32 | N;23/N;34 | N;25/N;35 | N;27/N;34 | N;29/N;24 | N;23/N;40 | N;31/N;28 | N;20/N;28 |
| | | | | | | | | | |
| UL94-V | 1,20 mm | V-2 | V-2 | V-2 | V-2 | V-2 | V-0 | V-0 | V-0 |
| 48h/168h | | V-2*/V-0 | V-2/V-2 | V-0/V-2 | V-2*/V-2* | V-0/V-2* | V-0/V-0 | V-0/V-0 | V-0/V-0 |
| V0/V1/V2/durchgefallen (Anzahl) | | 8/1/1/0 | 6/0/4/0 | 8/0/2/0 | 8/0/2/0 | 9/0/1/0 | 10/0/0/0 | 10/0/0/0 | 10/0/0/0 |
| Nachbrennzeit (s) | | N;40/N;29 | N;66/N;44 | N;28/N;29 | N;33/N;43 | N;31/N;41 | N;32/N;39 | N;29/N;42 | N;35/N;29 |
| | | | | | | | | | |
| UL94-5V | 3,00 mm | 5VA | 5VA | 5VA | 5VA | 5VA | 5VA | 5VA | 5VA |
| Bewertungsstufe (Stab) 48h/168h | | erfüllt/erfüll t | erfüllt/erfüll t | erfüllt/erfüll t | erfüllt/erfüll t | erfüllt/erfüll t | erfüllt/erfüll t | erfüllt/erfüll t | erfüllt/erfüll t |
| (Platte) 48h/168h | | erfüllt/erfüll t | erfüllt/erfüll t | erfüllt/erfüll t | erfüllt/erfüll t | erfüllt/erfüll t | erfüllt/erfüll t | erfüllt/erfüll t | erfüllt/erfüll t |
| | | | | | | | | | |
| Aschegehalt (Mittelwert) (ro) (%) | 850,00000 °C; 0,50000 h | 10,92 | 10,98 | 11,38 | 11,06 | 11,25 | 10,92 | 11,22 | 11,34 |
| * bedeutet zweiter Brennsatz, d. h. die Probe wurde nochmals vermessen | | | | | | | | | |

Wie aus der Tabelle 1 ersichtlich ist, kann mit einer Zusammensetzung, welche (B) enthält, welche aber nicht mehr als 0,09 Gew.-% der Komponente (C) enthält, zumindest die gleiche, wenn nicht sogar eine bessere Flammwidrigkeit wie bei einer Zusammensetzung ohne (B), aber dafür mit erhöhter Menge (C) erzielt werden. Dabei sind gleichzeitig die thermischen Eigenschaften im Wesentlichen gleich. Die Fließfähigkeit ist bei den erfindungsgemäßen Zusammensetzung sogar verbessert.

Tabelle 2

| Komponente | | V2 | E8 | E9 | E10 | E11 | E12 | E13 | E14 |
|---|---|---|---|---|---|---|---|---|---|
| PC-A1 (Gew.-%) | | 68,562850 | 48,870422 | 47,882343 | 34,049227 | 33,061147 | - | . | . |
| PC-A2 (Gew.-%) | | 9,880797 | 9,880797 | 9,880797 | 9,880797 | 9,880797 | 9,880797 | 9,880797 | 9,880797 |
| PC-B (Gew.-%) | | - | 19,761594 | 19,761593 | 34,582789 | 34,582789 | 68,63201 6 | 67,643936 | 66,65585 7 |
| C (Gew.-%) | | 0,158093 | 0,088927 | 0,088927 | 0,088927 | 0,088927 | 0,088927 | 0,088927 | 0,088927 |
| D2 (Gew.-%) | | 19,761594 | 19,761594 | 19,761594 | 19,761594 | 19,761594 | 19,76159 4 | 19,761594 | 19,76159 4 |
| E1 (Gew.-%) | | - | - | 0,988080 | - | 0,988080 | - | 0,988080 | 1,976159 |
| F1 (Gew.-%) | | 0,444636 | 0,444636 | 0,444636 | 0,444636 | 0,444636 | 0,444636 | 0,444636 | 0,444636 |
| F2 (Gew.-%) | | 0,000563 | 0,000563 | 0,000563 | 0,000563 | 0,000563 | 0,000563 | 0,000563 | 0,000563 |
| F3 (Gew.-%) | | 0,001502 | 0,001502 | 0,001502 | 0,001502 | 0,001502 | 0,001502 | 0,001502 | 0,001502 |
| F4 (Gew.-%) | | 0,004269 | 0,004269 | 0,004269 | 0,004269 | 0,004269 | 0,004269 | 0,004269 | 0,004269 |
| F5 (Gew.-%) | | 1,185696 | 1,185696 | 1,185696 | 1,185696 | 1,185696 | 1,185696 | 1,185696 | 1,185696 |
| | | | | | | | | | |
| MVR ($cm^3$/[10min]) | 300 °C; 1,20 kg; 6 min | 6,5 | 5,2 | 5,6 | 4,9 | 4,9 | 3,7 | 3,8 | 4,1 |
| MVR ($cm^3$/[10min]) | 300 °C; 1,20 kg; 19 min | 7,1 | 6 | 6,3 | 5,6 | 5,3 | 4,1 | 4,3 | 4,8 |
| | | | | | | | | | |
| Schmelzeviskosität in Pas | | | | | | | | | |
| Viskosität 1 (50s-1) (ro) | 300 °C | 914 | | 676 | | | 1149 | 979 | 987 |
| Viskosität 2 (100 s-1) (ro) | | 634 | | 591 | | | 746 | 681 | 672 |

(fortgesetzt)

| Komponente | | V2 | E8 | E9 | E10 | E11 | E12 | E13 | E14 |
|---|---|---|---|---|---|---|---|---|---|
| Viskosität 3 (200 s-1) (ro) | | 500 | | 449 | | | 517 | 479 | 463 |
| Viskosität 4 (500 s-1) (ro) | | 380 | 338 | 325 | 328 | | 355 | 326 | 316 |
| Viskosität 5 (1000 s-1) (ro) | | 297 | 255 | 254 | 254 | | 270 | 244 | 239 |
| Viskosität 6 (1500 s-1) (ro) | | 252 | 224 | 217 | 235 | | 224 | 208 | 206 |
| Viskosität 7 (5000 s-1) (ro) | | 126 | 112 | 115 | 110 | | 113 | 107 | 102 |
| | | | | | | | | | |
| Viskosität 1 (50s-1) (ro) | 280 °C | 1241 | 1253 | 1222 | 1306 | 1337 | 1646 | 1405 | 1357 |
| Viskosität 2 (100 s-1) (ro) | | 997 | 990 | 976 | 1012 | 1094 | 1143 | 1033 | 985 |
| Viskosität 3 (200 s-1) (ro) | | 849 | 802 | 793 | 802 | 818 | 861 | 767 | 741 |
| Viskosität 4 (500 s-1) (ro) | | 643 | 591 | 589 | 583 | 551 | 575 | 528 | 503 |
| Viskosität 5 (1000 s-1) (ro) | | 485 | 444 | 448 | 433 | 405 | 409 | 384 | 366 |
| Viskosität 6 (1500 s-1) (ro) | | 391 | 358 | 359 | 350 | 327 | 326 | 312 | 299 |
| Viskosität 7 (5000 s-1) (ro) | | 173 | 161 | 162 | 158 | 150 | 150 | 144 | 140 |
| | | | | | | | | | |
| Viskosität 1 (50 s-1) (ro) | 260 °C | 2218 | 2298 | 2161 | 2304 | 2202 | 2500 | 2263 | 2150 |
| Viskosität 2 (100 s-1) (ro) | | 1910 | 1899 | 1759 | 1861 | 1736 | 1828 | 1706 | 1612 |

(fortgesetzt)

| Komponente | | V2 | E8 | E9 | E10 | E11 | E12 | E13 | E14 |
|---|---|---|---|---|---|---|---|---|---|
| Viskosität 3 (200 s-1) (ro) | | 1554 | 1546 | 1433 | 1488 | 1384 | 1389 | 1317 | 1224 |
| Viskosität 4 (500 s-1) (ro) | | 1080 | 1061 | 993 | 1020 | 948 | 911 | 866 | 815 |
| Viskosität 5 (1000 s-1) (ro) | | 723 | 712 | 664 | 687 | 634 | 618 | 593 | 559 |
| Viskosität 6 (1500 s-1) (ro) | | 555 | 540 | 507 | 526 | 489 | 474 | 463 | 439 |
| Viskosität 7 (5000 s-1) (ro) | | 225 | 217 | 210 | 218 | 200 | 198 | 196 | 187 |
| | | | | | | | | | |
| Vicat (°C) | VST B - (50N); 50 K/h | 136,4 | 136,3 | 134,7 | 136,6 | 134,5 | 136,5 | 135,2 | 132,4 |
| HDT (°C) | A (Biegespan nung = 1,8N/mm2 ) | 143,9 | 143,4 | 140,3 | 143,2 | 139,8 | 141,5 | 139,5 | 138 |
| | | | | | | | | | |
| UL94-V | 1,80 mm | V-0 | V-0 | V-0 | V-0 | V-0 | V-0 | V-0 | V-0 |
| 48h/168h | | V-0/V-0 | V-0/V-0 | V-0/V-0 | V-0/V-0 | V-0/V-0 | V-0/V-0 | V-0/V-0 | V-0/V-0 |
| V0/V1/V2/durchgefallen (Anzahl) | | 10/0/0/0 | 10/0/0/0 | 10/0/0/0 | 10/0/0/0 | 10/0/0/0 | 10/0/0/0 | 10/0/0/0 | 10/0/0/0 |
| Nachbrennzeit (s) | | 27/20 | 20/29 | 18/29 | 17/32 | 22/29 | 18/23 | 19/23 | 20/31 |
| | | | | | | | | | |
| UL94-V | 1,50 mm | V-0 | V-0 | V-0 | V-0 | V-0 | V-0 | V-0 | V-0 |
| 48h/168h | | V-0/V-0 | V-0/V-0 | V-0/V-0 | V-0/V-0 | V-0/V-0 | V-0/V-0 | V-0/V-0 | V-0/V-0 |
| V0/V1/V2/durchgefallen (Anzahl) | | 10/0/0/0 | 10/0/0/0 | 10/0/0/0 | 10/0/0/0 | 10/0/0/0 | 10/0/0/0 | 10/0/0/0 | 10/0/0/0 |
| Nachbrennzeit (s) | | 30/30 | 23/32 | 25/35 | 19/27 | 31/29 | 34/30 | 22/34 | 28/26 |

(fortgesetzt)

| Komponente | | V2 | E8 | E9 | E10 | E11 | E12 | E13 | E14 |
|---|---|---|---|---|---|---|---|---|---|
| UL94-V | | V-0 | V-0 | V-0 | V-2 | V-0 | V-0 | V-0 | V-0 |
| 48h/168h | | V-0/V-0* | V-0/V-0 | V-0/V-0 | V-0/V-2 | V-0/V-0 | V-0/V-0* | V-0/V-0 | V-0/V-0 |
| V0/V1/V2/durchgefallen (Anzahl) | 1,20 mm | 10/0/0/0 | 10/0/0/0 | 10/0/0/0 | 8/0/2/0 | 10/0/0/0 | 10/0/0/0 | 10/0/0/0 | 10/0/0/0 |
| Nachbrennzeit (s) | | 31/26 | 32/32 | 33/39 | 25/30 | 26/25 | 34/42 | 31/37 | 26/23 |
| | | | | | | | | | |
| UL94-5V | | | | | | | | | |
| Bewertungsstufe (Stab) 48h/168h | 6,40 mm | mind. 5-VB | mind. 5-VB | mind. 5-VB | mind. 5-VB | mind. 5-VB | mind. 5-VB | mind. 5-VB | mind. 5-VB |
| Klasse Stabprüfung (ro) | | erfüllt/erfüll t | erfüllt/erfüll t | erfüllt/erfüll t | erfüllt/erfüll t | erfüllt/erfüll t | erfüllt/erfüllt | erfüllt/erfüll t | erfüllt/erf üllt |
| | | | | | | | | | |
| Aschegehalt (Mittelwert) (ro) (%) | 850,00000 °C; 0,50000 h | 20,63 | 20,81 | 20,88 | 20,75 | 21,08 | 21,02 | 20,83 | 19,98 |

Wie Tabelle 2 zu entnehmen ist, weisen auch die erfindungsgemäßen Zusammensetzung mit einem Gehalt an einer Glasfaser bis zu 20 Gew.-% eine Flammwidrigkeit von mindestens V-0 bei 1,5 mm Schichtdicke auf. Ebenso kann auch hier die Beibehaltung der thermischen Eigenschaften sowie eine Verbesserung der Fließfähigkeit beobachtet werden.

Tabelle 3:

| Komponente | | V4 | E21 | E22 | E23 | E24 | E25 | E26 | E27 |
|---|---|---|---|---|---|---|---|---|---|
| PC-A4 (Gew.-%) | | 89,253396 | 69,419309 | 69,419308 | 44,626699 | 44,626698 | - | - | - |
| PC-A3 (Gew.-%) | | 9,103846 | 8,151810 | 9,143515 | 8,151810 | 9,143515 | 9,143515 | 8,151810 | 7,160106 |
| PC-B (Gew.-%) | | - | 19,834088 | 19,834088 | 44,626698 | 44,626698 | 89,253396 | 89,253397 | 89,253396 |
| C (Gew.-%) | | 0,128922 | 0,089253 | 0,089253 | 0,089253 | 0,089253 | 0,089253 | 0,089253 | 0,089253 |
| E1 (Gew.-%) | | - | 0,991704 | - | 0,991704 | - | - | 0,991704 | 1,983409 |
| F1 (Gew.-%) | | 0,396682 | 0,396682 | 0,396682 | 0,396682 | 0,396682 | 0,396682 | 0,396682 | 0,396682 |
| F6 (Gew.-%) | | 0,029751 | 0,029751 | 0,029751 | 0,029751 | 0,029751 | 0,029751 | 0,029751 | 0,029751 |
| F7 (Gew.-%) | | 0,247926 | 0,247926 | 0,247926 | 0,247926 | 0,247926 | 0,247926 | 0,247926 | 0,247926 |
| F8 (Gew.-%) | | 0,009917 | 0,009917 | 0,009917 | 0,009917 | 0,009917 | 0,009917 | 0,009917 | 0,009917 |
| F9 (Gew.-%) | | 0,166110 | 0,166110 | 0,166110 | 0,166110 | 0,166110 | 0,166110 | 0,166110 | 0,166110 |
| F10 (Gew.-%) | | 0,003967 | 0,003967 | 0,003967 | 0,003967 | 0,003967 | 0,003967 | 0,003967 | 0,003967 |
| F4 (Gew.-%) | | 0,109087 | 0,109087 | 0,109087 | 0,109087 | 0,109087 | 0,109087 | 0,109087 | 0,109087 |
| F5 (Gew.-%) | | 0,550396 | 0,550396 | 0,550396 | 0,550396 | 0,550396 | 0,550396 | 0,550396 | 0,550396 |
| | | | | | | | | | |
| MVR ($cm^3$/[10min]) | 300 °C; 1,20 kg; 7 min | 11,8 | 11, 4 | 10,7 | 10,3 | 9,6 | 8,4 | 7,8 | 8,4 |
| MVR ($cm^3$/[10min]) | 300 °C; 1,20 kg; 20 min | 12,7 | 12 , 5 | 11,8 | 11,2 | 10,2 | 9,1 | 8,8 | 9,3 |
| | | | | | | | | | |
| Vicat (°C) | VST B - (50N); 50 K/h | 140,3 | 138,7 | 140,2 | 138,7 | 140 | 138,4 | 139,4 | 136,7 |
| | | | | | | | | | |
| UL94-V | 3,00 mm | V-0 | V-0 | V-0 | V-0 | V-0 | V-0 | V-0 | V-0 |
| 48h/168h | | V-0/V-0 | V-0/V-0 | V-0/V-0 | V-0/V-0 | V-0/V-0 | V-0/V-0 | V-0/V-0 | V-0/V-0 |
| V0/V1/V2/durchgefallen (Anzahl) | | 10/0/0/0 | 10/0/0/0 | 10/0/0/0 | 10/0/0/0 | 10/0/0/0 | 10/0/0/0 | 10/0/0/0 | 10/0/0/0 |
| Nachbrennzeit (s) | | N;19/N;35 | N;23/N;30 | N;28/N;25 | N;19/N;19 | N;26/N;28 | N;24/N;18 | N;24/N;29 | N;18/N;20 |

(fortgesetzt)

| Komponente | | V4 | E21 | E22 | E23 | E24 | E25 | E26 | E27 |
|---|---|---|---|---|---|---|---|---|---|
| | | | | | | | | | |
| UL94-V | 2,80 mm | V-0 | V-0 | V-0 | V-0 | V-0 | V-0 | V-0 | V-0 |
| 48h/168h | | V-0/V-0 | V-0/V-0 | V-0/V-0 | V-0/V-0 | V-0/V-0 | V-0/V-0 | V-0*/V-0 | V-0/V-0 |
| V0/V1/V2/durchgefallen (Anzahl) | | 10/0/0/0 | 10/0/0/0 | 10/0/0/0 | 10/0/0/0 | 10/0/0/0 | 10/0/0/0 | 10/0/0/0 | 10/0/0/0 |
| Nachbrennzeit (s) | | N;25/N;25 | N;27/N;27 | N;29/N;28 | N;13/N;32 | N;19/N;32 | N;24/N;33 | N;22/N;30 | N;20/N;28 |

Wie Tabelle 4 zu entnehmen ist, weisen auch Zusammensetzungen ohne Glasfaser eine gute Flammwidrigkeit bei nahezu unveränderten thermischen Eigenschaften auf.

## Patentansprüche

1. Zusammensetzung enthaltend

(A) 3 bis 85 Gew.-% eines linearen Polycarbonats,
(B) 15 bis 96 Gew.-% eines Polycarbonats mit einem Verzweigungsgrad von 0,8 bis 1,5 mol-%, welches keine Endgruppen der Formel (I) umfasst:

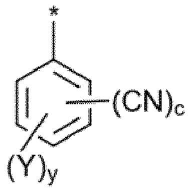

(I),

in der Y jeweils unabhängig für ein Halogen, eine Alkylgruppe mit 1 bis 3 Kohlenstoffatomen, eine Alkoxygruppe mit 1 bis 3 Kohlenstoffatomen, eine Arylalkylgruppe mit 7 bis 12 Kohlenstoffatomen, eine Alkylarylgruppe oder eine Nitrogruppe steht,
y 0 bis 4 ist und c 1 bis 5 ist, unter der Voraussetzung, dass y+c 1 bis 5 ist, und in der
* für die Position steht, mit der die Formel (I) das Polycarbonat (B) terminiert,

(C) 0,040 bis 0,095 Gew.-% einer Verbindung, ausgewählt aus der Gruppe von Alkali-, Erdalkali- oder Ammoniumsalzen aliphatischer oder aromatischer Sulfonsäure-, Sulfonamid-, oder Sulfonimidderivate und Kombinationen aus diesen, und
(D) 0 bis 40 Gew.-% einer Verstärkungsfaser,

wobei sich die Gew.-% auf die Summe der Komponenten (A) bis (D) beziehen.

2. Zusammensetzung nach Anspruch 1, **dadurch gekennzeichnet, dass** sie frei von Polytetrafluorethylen ist.

3. Zusammensetzung nach Anspruch 1 oder 2, **dadurch gekennzeichnet, dass** sie frei von halogenierten Flammschutzmitteln ist.

4. Zusammensetzung nach einem der Ansprüche 1 bis 3, **dadurch gekennzeichnet, dass** sie frei von einem Polysiloxan-Polycarbonat-Blockcokondensat ist.

5. Zusammensatzung nach einem der Ansprüche 1 bis 4, **dadurch gekennzeichnet, dass** sie die Komponenten (A) bis (D) in den folgenden Mengen enthält:

4 bis 75 Gew.-% (A),
15 bis 85 Gew.-% (B),
0,050 bis 0,095 Gew.-% (C) und
5 bis 30 Gew.-% (D),
wobei sich die Gew.-% auf die Summe der Komponenten (A) bis (D) beziehen.

6. Zusammensetzung nach einem der Ansprüche 1 bis 5, **dadurch gekennzeichnet, dass** sie zusätzlich

(E) ein cyclisches Siloxan der Formel $(R^1{}_2SiO)_y$ und /oder ein Siloxan, welches eine trifunktionelle Siloxaneinheitder Formel $R^2SiO_{3/2}$ umfasst,
worin $R^1$ jeweils unabhängig für eine monovalente aliphatische oder aromatische Kohlenwasserstoffgruppe oder eine fluorierte Kohlenwasserstoffgruppe mit jeweils 1 bis 18 Kohlenstoffatomen steht und y eine Zahl von 3 bis 12 ist beziehungsweise

worin $R^2$ jeweils unabhängig für Wasserstoff, eine monovalente aliphatische oder aromatische Kohlenwasserstoffgruppe mit jeweils 1 bis 18 Kohlenstoffatomen oder eine monovalente Alkoxygruppe mit 1 bis 18 Kohlenstoffatomen steht.

**7.** Zusammensetzung nach einem der Ansprüche 1 bis 6, **dadurch gekennzeichnet, dass** sie zusätzlich (F) mindestens ein weiteres Additiv ausgewählt aus der Gruppe, bestehend aus Thermostabilisatoren, Entformungsmitteln, UV-Absorbern, Verträglichkeitsvermittlern, Antioxidantien, IR-Absorbern, Fließverbesserer, Umesterungsstabilisatoren, Additive für die Lasermarkierung, Schlagzähmodifikatoren, lichtstreuende Diffusionsadditive und Farbmitteln umfasst.

**8.** Zusammensetzung nach Anspruch 7, **dadurch gekennzeichnet, dass** sie aus den Komponenten (A) bis (F) besteht.

**9.** Zusammensetzung nach einem der Ansprüche 1 bis 8, **dadurch gekennzeichnet, dass** das lineare Polycarbonat (A) keine Endgruppen der Formel (I) umfasst:

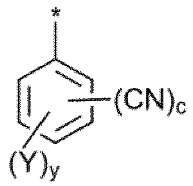

(I),

in der Y, y und c wie in Anspruch 1 definiert sind.

**10.** Zusammensetzung nach einem der Ansprüche 1 bis 8, **dadurch gekennzeichnet, dass** das lineare Polycarbonat (A) und/oder das Polycarbonat (B) Endgruppen der Formel (2a), (2b)und/oder (2c) umfasst:

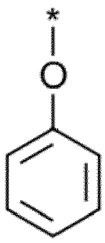

(2a),

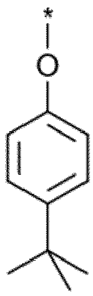

(2b),

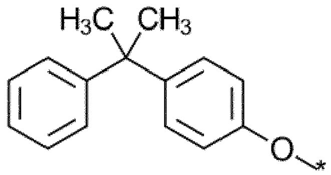

(2c),

wobei * für die Position steht, mit der die Formeln (2a), (2b) und (2c) das jeweilige Polycarbonat (A) und/oder (B) terminieren.

**11.** Zusammensetzung nach einem der Ansprüche 1 bis 10, **dadurch gekennzeichnet, dass** sie die Komponente (C) zu 0,070 bis 0,085 Gew.-% enthält.

**12.** Zusammensetzung nach einem der Ansprüche 1 bis 11, **dadurch gekennzeichnet, dass** Komponente (C) Kaliumperfluorbutansulfonat ist.

**13.** Verwendung eines Polycarbonats (B) mit einem Verzweigungsgrad von 0,8 bis 1,5 mol-%, welches keine Endgruppen der Formel (I) umfasst:

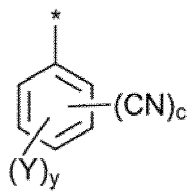

(I),

in der Y jeweils unabhängig für ein Halogen, eine Alkylgruppe mit 1 bis 3 Kohlenstoffatomen, eine Alkoxygruppe mit 1 bis 3 Kohlenstoffatomen, eine Arylalkylgruppe mit 7 bis 12 Kohlenstoffatomen, eine Alkylarylgruppe oder eine Nitrogruppe steht,
y 0 bis 4 ist und c 1 bis 5 ist, unter der Voraussetzung, dass y+c 1 bis 5 ist, und in der
* für die Position steht, mit der die Formel (I) das Polycarbonat (B) terminiert,

in einer Zusammensetzung, enthaltend

(A) lineares Polycarbonat,
(C) ein Alkali-, Erdalkali- oder Ammoniumsalz aliphatischer oder aromatischer Sulfonsäure-, Sulfonamid-, oder Sulfonimidderivate oder Kombinationen aus diesen und
(D) gegebenenfalls eine Verstärkungsfaser,

zur Erzielung einer V-0 Klassifikation nach UL94 bei 2,00 mm, bevorzugt 1,5 mm Schichtdicke, wobei der Gehalt an Komponente (C) in der Zusammensetzung 0,05 bis 0,095 Gew.-% beträgt.

**14.** Verwendung nach Anspruch 13, **dadurch gekennzeichnet, dass** das lineare Polycarbonat (A) keine Endgruppen der Formel (I) umfasst:

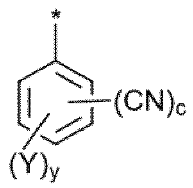

(I),

in der Y, y und c wie in Anspruch 13 definiert sind.

**15.** Verwendung nach Anspruch 13 oder 14, **dadurch gekennzeichnet, dass** die Zusammensetzung eine Zusammensetzung nach einem der Ansprüche 1 bis 12 ist.

Europäisches Patentamt
European Patent Office
Office européen des brevets

# EUROPÄISCHER RECHERCHENBERICHT

Nummer der Anmeldung
EP 21 17 4020

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | WO 2012/065292 A1 (SABIC INNOVATIVE PLASTICS IP [NL]; AN NARONG [CN] ET AL.) 24. Mai 2012 (2012-05-24)<br>* Zusammenfassung; Ansprüche 1,4,11-16 * | 1-15 | INV.<br>C08K5/00<br>C08L69/00 |
| X<br>Y | DE 602 23 842 T2 (SINGH RAJENDRA KASHINATH [US] ET AL) 9. Oktober 2008 (2008-10-09)<br>* Zusammenfassung *<br>* Tabellen * | 1,6,7, 9-12<br>1-15 | |
| X<br>Y | WO 2015/140671 A1 (SABIC GLOBAL TECHNOLOGIES BV [NL]) 24. September 2015 (2015-09-24)<br>* Zusammenfassung; Ansprüche 1,9,19; Beispiele 10-13; Tabelle 3 * | 1-4,6-9, 11<br>1-15 | |
| X<br>Y | DATABASE CA [Online] CHEMICAL ABSTRACTS SERVICE, COLUMBUS, OHIO, US; 19. Juli 2012 (2012-07-19), RYU, HYEON JUNG ET AL: "Polycarbonate resin composition with good transparency and flame retardancy", XP002804536, gefunden im STN Database accession no. 2012:1042442<br>* Zusammenfassung; Ansprüche 1-4 *<br>-& KR 2013 0124930 A (LG CHEMICAL LTD [KR]) 15. November 2013 (2013-11-15) | 1-4,6-9, 11,12<br>1-15 | RECHERCHIERTE SACHGEBIETE (IPC)<br>C08K<br>C09J<br>C08L |
| Y | WO 01/83606 A1 (GEN ELECTRIC [US]) 8. November 2001 (2001-11-08)<br>* Zusammenfassung; Ansprüche 1-9; Beispiel 2 * | 1-15 | |

Der vorliegende Recherchenbericht wurde für alle Patentansprüche erstellt

1

| Recherchenort | Abschlußdatum der Recherche | Prüfer |
|---|---|---|
| München | 25. Oktober 2021 | Schütte, Maya |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 21 17 4020

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-10-2021

| Im Recherchenbericht angeführtes Patentdokument | Datum der Veröffentlichung | Mitglied(er) der Patentfamilie | Datum der Veröffentlichung |
|---|---|---|---|
| WO 2012065292 A1 | 24-05-2012 | CN 103314054 A | 18-09-2013 |
| | | EP 2640782 A1 | 25-09-2013 |
| | | KR 20130108416 A | 02-10-2013 |
| | | US 2013274391 A1 | 17-10-2013 |
| | | WO 2012065292 A1 | 24-05-2012 |
| DE 60223842 T2 | 09-10-2008 | AU 2002350134 A1 | 23-06-2003 |
| | | CN 1617905 A | 18-05-2005 |
| | | DE 60223842 T2 | 09-10-2008 |
| | | EP 1458799 A1 | 22-09-2004 |
| | | JP 5480041 B2 | 23-04-2014 |
| | | JP 2005511843 A | 28-04-2005 |
| | | JP 2010248527 A | 04-11-2010 |
| | | KR 20040071714 A | 12-08-2004 |
| | | TW I287558 B | 01-10-2007 |
| | | US 6462111 B1 | 08-10-2002 |
| | | WO 03050176 A1 | 19-06-2003 |
| WO 2015140671 A1 | 24-09-2015 | CN 106103590 A | 09-11-2016 |
| | | EP 3001841 A1 | 06-04-2016 |
| | | KR 20160136297 A | 29-11-2016 |
| | | US 2017081512 A1 | 23-03-2017 |
| | | WO 2015140671 A1 | 24-09-2015 |
| KR 20130124930 A | 15-11-2013 | KEINE | |
| WO 0183606 A1 | 08-11-2001 | CN 1426436 A | 25-06-2003 |
| | | CN 1955214 A | 02-05-2007 |
| | | EP 1278798 A1 | 29-01-2003 |
| | | EP 2065436 A2 | 03-06-2009 |
| | | JP 2003531940 A | 28-10-2003 |
| | | KR 20020091248 A | 05-12-2002 |
| | | US 6353046 B1 | 05-03-2002 |
| | | WO 0183606 A1 | 08-11-2001 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2008060714 A2
- WO 03050176 A1
- WO 201206292 A1
- EP 1506249 A1
- US 3028635 A
- US 2999825 A
- US 3148172 A
- US 2991273 A
- US 3271367 A
- US 4982014 A
- US 2999846 A
- DE 1570703 A
- DE 2063050 A
- DE 2036052 A
- DE 2211956 A
- DE 3832396 A
- FR 1561518 A
- JP 61062039 A
- JP 61062040 A
- JP 61105550 A
- EP 0839623 A
- WO 9615102 A
- EP 0500496 A


### In der Beschreibung aufgeführte Nicht-Patentliteratur


- Chemistry and Physics of Polycarbonates. **SCHNELL ; SYDNEY.** Polymer Reviews. Interscience Publishers, 1964, vol. 9
- Polycarbonates. **D. FREITAG ; U. GRIGO ; P.R. MÜLLER ; H. NOUVERTNÉ ; BAYER AG.** Encyclopedia of Polymer Science and Engineering. 1988, vol. 11, 648-718
- Polycarbonate. **U. GRIGO ; K. KIRCHNER ; P.R. MÜLLER ; BECKER ; BRAUN.** Kunststoff-Handbuch, Band 3/1, Polycarbonate, Polyacetale, Polyester, Celluloseester. Carl Hanser Verlag, 1992, vol. 3/1, 117-299
- **H. SCHNELL.** Chemistry and Physics of Polycarbonates. Interscience Publishers, 1964
- **HANS ZWEIFEL.** Plastics Additives Handbook. Hanser Verlag, 2000